# EUROPEAN PATENT APPLICATION

(11) **EP 4 379 460 A1**
(43) Date of publication of application: **05.06.2024**
(21) Application number: 22848873.0
(22) Date of filing: 25.02.2022
(51) Int. Cl.: G03B 5/00, G01P 15/00, G01C 19/5776, H04N 23/60

(54) **INERTIAL MEASUREMENT UNIT, METHOD FOR OPERATING INERTIAL MEASUREMENT UNIT, IMAGING DEVICE, DISPLAY DEVICE, AND PROGRAM**

(30) Priority: 28.07.2021 JP 2021122932
(71) Applicant: Sony Group Corporation, Tokyo 108-0075 (JP)
(72) Inventor: YAMASHITA, Kosei, Tokyo 108-0075 (JP); SATO, Tetsuro, Tokyo 108-0075 (JP); KIMISHIMA, Masato, Tokyo 108-0075 (JP)
(74) Representative: MFG Patentanwälte Meyer-Wildhagen Meggle-Freund Gerhard PartG mbB
(86) International application number: PCT/JP2022/007795
(87) International publication number: WO 2023/007789

(57) **Abstract**

The present disclosure relates to an inertial measurement device that enables, in correcting a shake, appropriate shake correction in consideration of a time lag from observation timing of an IMU until motion of an actuator or the like is controlled, a method of operating an inertial measurement device, an imaging device, a display device, and a program.

Detection results are combined and output by a plurality of inertial measurement units (IMUs) of an imaging device body, and angular velocity and acceleration in the future after a predetermined time are output from current angular velocity and acceleration of a main body unit. Future position and attitude of an image sensor are detected on the basis of the future angular velocity and acceleration, and the image sensor is driven such that a shake of the image sensor is absorbed on the basis of the position and attitude as a detection result, thereby correcting the shake of the image sensor. It is applicable to an imaging device.

## Description

### TECHNICAL FIELD

The present disclosure relates to an inertial measurement device, a method of operating an inertial measurement device, an imaging device, a display device, and a program, and more particularly relates to an inertial measurement device capable of improving detection accuracy of a multi-IMU and highly accurately correcting an image shake, a method of operating an inertial measurement device, an imaging device, a display device, and a program.

### BACKGROUND ART

There has been proposed a multi-IMU, which is obtained by integrating detection results of a plurality of inertial measurement units (IMUs: inertial measurement devices) to improve detection accuracy.

As a technique for improving the detection accuracy of the multi-IMU, there has been proposed a technique that enables appropriate synthesis of observation values of a plurality of IMUs according to noise characteristics of the plurality of IMUs and conditions for the observation values (see Patent Document 1).

Furthermore, there has been proposed a technique in which an IMU is mounted on an imaging device and motion of an image sensor is controlled by an actuator or the like on the basis of an observation value to correct an imaging shake (Patent Documents 2 and 3).

In view of the above, it is conceivable to mount the multi-IMU on an imaging device and apply the techniques of Patent Documents 2 and 3 to achieve highly accurate imaging shake correction.

### CITATION LIST

### PATENT DOCUMENT

Patent Document 1: WO 2020/045099
Patent Document 2: Japanese Patent Application Laid-Open No. 2014-138380
Patent Document 3: Japanese Patent Application Laid-Open No. 2011-095467

### SUMMARY OF THE INVENTION

### PROBLEMS TO BE SOLVED BY THE INVENTION

Meanwhile, in the imaging correction using the IMU according to Patent Documents 1 to 3, the motion of the image sensor is controlled by the actuator or the like on the basis of the observation value of the IMU, which causes a time lag between the observation timing of the IMU and the timing at which the motion of the actuator or the like is controlled, whereby there is a possibility that the shake correction may not be appropriately carried out.

The present disclosure has been conceived in view of such a situation, and in particular, in correcting a shake, it enables appropriate shake correction in consideration of a time lag from observation timing of an IMU until motion of an actuator or the like is controlled.

### SOLUTIONS TO PROBLEMS

An inertial measurement device and a program according to a first aspect of the present disclosure are an inertial measurement device and a program including an inertial measurement unit (IMU) that detects current angular velocity and acceleration and a prediction unit that predicts angular velocity and acceleration in the future after a predetermined time on the basis of the current angular velocity and acceleration detected by the IMU.

A method of operating an inertial measurement device according to the first aspect of the present disclosure is a method of operating an inertial measurement device including an inertial measurement unit (IMU) that detects current angular velocity and acceleration, the method including a step of predicting angular velocity and acceleration in the future after a predetermined time on the basis of the current angular velocity and acceleration detected by the IMU.

In the first aspect of the present disclosure, the current angular velocity and acceleration are detected, and the angular velocity and acceleration in the future after a predetermined time are predicted on the basis of the current angular velocity and acceleration.

An imaging device according to a second aspect of the present disclosure includes an image sensor that captures an image, a drive unit that drives the image sensor, an inertial measurer that detects angular velocity and acceleration of the image sensor in the future after a predetermined time, a future position/attitude detection unit that detects a future position and attitude of the image sensor on the basis of the future angular velocity and acceleration, and a drive control unit that performs control to drive the drive unit to correct a shake of the image sensor on the basis of the future position and attitude of the image sensor, in which the inertial measurer includes an inertial measurement unit (IMU) that detects current angular velocity and acceleration of a main body unit, and a prediction unit that predicts the angular velocity and acceleration in the future after the predetermined time on the basis of the current angular velocity and acceleration detected by the IMU.

In the second aspect of the present disclosure, the image sensor that captures an image is driven, the angular velocity and acceleration of the image sensor in the future after the predetermined time are detected, the future position and attitude of the image sensor are detected on the basis of the future angular velocity and acceleration, control is performed to correct a shake of the image sensor on the basis of the future position and attitude of the image sensor, the current angular velocity and acceleration of the main body unit are detected, and the angular velocity and acceleration in the future after the predetermined time are predicted on the basis of the detected current angular velocity and acceleration.

A display device according to a third aspect of the present disclosure includes a display unit that displays an image viewable by a user in a state of being worn in front of eyes on the head of the user, an inertial measurer that detects angular velocity and acceleration of the head in the future after a predetermined time, a future position/attitude detection unit that detects a future position and attitude of the head on the basis of the future angular velocity and acceleration, and a shake correction unit that corrects a shake of the image displayed on the display unit on the basis of the future position and attitude of the head, in which the inertial measurer includes an inertial measurement unit (IMU) that detects current angular velocity and acceleration, and a prediction unit that predicts the angular velocity and acceleration in the future after the predetermined time on the basis of the current angular velocity and acceleration detected by the IMU.

In the third aspect of the present disclosure, an image viewable by the user is displayed in the state of being worn in front of the eyes on the head of the user, the angular velocity and acceleration of the head in the future after the predetermined time are detected, the future position and attitude of the head are detected on the basis of the future angular velocity and acceleration, a shake of the image displayed on the display unit is corrected on the basis of the future position and attitude of the head, the current angular velocity and acceleration are detected, and the angular velocity and acceleration in the future after the predetermined time are predicted on the basis of the detected current angular velocity and acceleration.

### BRIEF DESCRIPTION OF DRAWINGS

Fig. 1 is a diagram for explaining a configuration example of an imaging device that implements hand shake correction.
Fig. 2 is a diagram for explaining an outline of the imaging device according to the present disclosure.
Fig. 3 is a diagram for explaining an outline of future prediction of angular velocity and acceleration.
Fig. 4 is a diagram for explaining a configuration example of an imaging device according to a first embodiment of the present disclosure.
Fig. 5 is a diagram for explaining an appearance configuration example of a multi-IMU in Fig. 4.
Fig. 6 is a diagram for explaining an appearance configuration example of the multi-IMU in Fig. 4.
Fig. 7 is a diagram for explaining functions implemented by the multi-IMU in Fig. 4.
Fig. 8 is a diagram for explaining a configuration example of a sensor position detection unit in Fig. 4.
Fig. 9 is a flowchart for explaining an angular velocity and acceleration detection process by the multi-IMU in Fig. 4.
Fig. 10 is a flowchart for explaining an imaging process by the imaging device in Fig. 4.
Fig. 11 is a flowchart for explaining a learning process by the imaging device in Fig. 4.
Fig. 12 is a diagram for explaining a configuration example of an imaging device according to a second embodiment of the present disclosure.
Fig. 13 is a diagram for explaining functions implemented by a multi-IMU in Fig. 12.
Fig. 14 is a flowchart for explaining an angular velocity and acceleration detection process by the multi-IMU in Fig. 12.
Fig. 15 is a flowchart for explaining a learning process by the imaging device in Fig. 12.
Fig. 16 is a diagram for explaining a configuration example of a VR glass device according to a third embodiment of the present disclosure.
Fig. 17 is a flowchart for explaining a display process by the VR glass device in Fig. 16.
Fig. 18 is a diagram for explaining a configuration example of a general-purpose personal computer.

### MODE FOR CARRYING OUT THE INVENTION

Hereinafter, preferred embodiments of the present disclosure will be described in detail with reference to the accompanying drawings. Note that, in the present specification and the drawings, components having substantially the same functional configuration are denoted by the same reference signs, and redundant descriptions are omitted.

Hereinafter, modes for carrying out the present technology will be described. The description will be given in the following order.
1. Overview of present disclosure
2. First embodiment
3. Second embodiment
4. Third embodiment
5. Example of execution by software

### <<1. Overview of present disclosure>>

### <Configuration example of imaging device that implements hand shake correction by driving image sensor>

In describing an imaging device having an anti-shake function according to the present disclosure, a configuration example of the imaging device that physically corrects a hand-induced shake by a drive mechanism that drives an image sensor will be described.

Note that, while the hand-induced shake indicates an image shake caused by a shake of the imaging device body that occurs when a user grips and operates the imaging device with a hand, it is assumed here to indicate the overall shake that occurs at the time of imaging. Thus, for example, the hand-induced shake includes a shake of imaging caused by high-frequency vibration generated by a motor or an engine being driven with respect to the imaging device mounted on a mobile device, such as a drone, a vehicle, or the like, which is driven by the motor, the engine, or the like. Furthermore, it is assumed that a simple term "shake" of an image also includes a hand-induced shake.

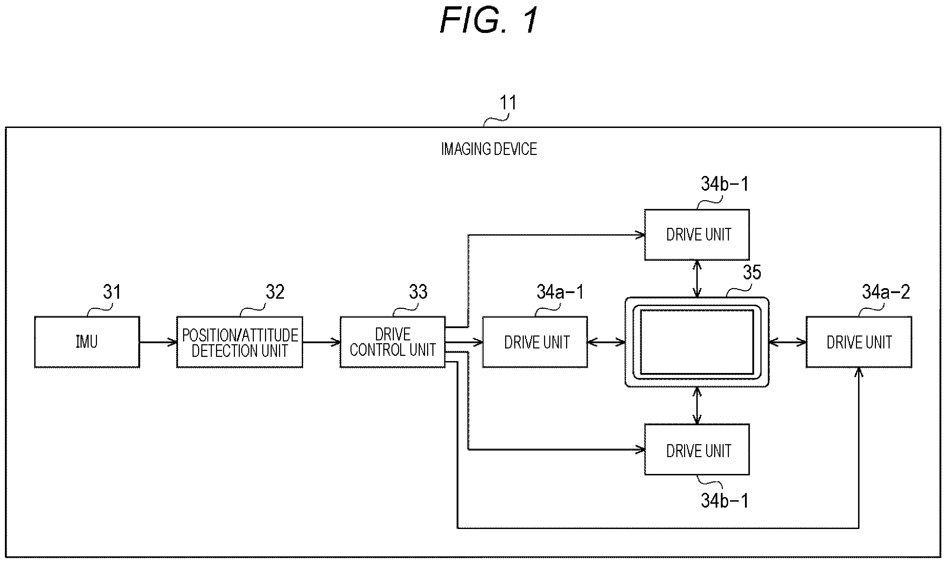

Fig. 1 is a configuration example of the imaging device that enables hand shake correction by detecting an attitude and a position of the imaging device body by an IMU and driving the image sensor on the basis of information regarding the detected attitude and position of the imaging device body.

An imaging device 11 in Fig. 1 includes an inertial measurement unit (IMU: inertial measurement device) 31, a position/attitude detection unit 32, a drive control unit 33, drive units 34a-1, 34a-2, 34b-1, and 34b-2, and an image sensor 35.

The IMU 31 includes, for example, an acceleration sensor that detects acceleration that is translational motion in each of three axial directions including XYZ axes and a gyroscope sensor that detects angular velocity that is rotational motion, and detects acceleration and angular velocity in each of the three axial directions to output them to the position/attitude detection unit 32.

The position/attitude detection unit 32 detects an attitude of the main body of the imaging device 11 on the basis of the angular velocity detected by the IMU 31, detects a position of the main body of the imaging device 11 on the basis of the acceleration detected by the IMU 31, and outputs them to the drive control unit 33.

The drive control unit 33 outputs, to each of the drive units 34a-1, 34a-2, 34b-1, and 34b-2, a control signal for driving the image sensor 35 in a direction of canceling a generated shake (motion) on the basis of the information regarding the position and attitude of the main body of the imaging device 11 detected by the position/attitude detection unit 32.

The drive units 34a-1 and 34a-2 are drive mechanisms that physically drive the image sensor 35, such as an actuator, and drives the image sensor 35 in the horizontal direction in the drawing on the basis of the control signal supplied from the drive control unit 33. The drive units 34b-1 and 34b-2 are drive mechanisms that physically drive the image sensor 35, such as an actuator, and drives the image sensor 35 in the vertical direction in the drawing on the basis of the control signal supplied from the drive control unit 33.

Note that the drive units 34a-1, 34a-2, 34b-1, and 34b-2 will also be simply referred to as a drive unit 34 when it is not particularly required to distinguish between them.

The image sensor 35 includes a complementary metal oxide semiconductor (CMOS), a charge coupled device (CCD), or the like, generates pixel signals corresponding to light quantity of incident light to capture an image, and outputs the captured image.

That is, the drive control unit 33 controls the position and attitude of the image sensor 35 by driving the drive unit 34 on the basis of inertia navigation using the IMU 31 and the position/attitude detection unit 32.

Therefore, the drive control unit 33 controls the drive unit 34 to cancel the shake (motion) of the image sensor 35 by feedforward control based on the detection result of the position/attitude detection unit 32.

The drive unit 34 drives the image sensor 35 in a direction and a movement amount each based on the control signal supplied from the drive control unit 33.

As a result, the image sensor 35 is driven in a direction of canceling the hand-induced shake according to a change in the position and attitude of the imaging device 11, thereby achieving hand shake correction.

However, in the case of the configuration of the imaging device 11 in Fig. 1, the IMU 31 is provided outside the range driven by the drive unit 34 that drives the image sensor 35, whereby the position and attitude of the image sensor 35 may not be appropriately detected even though the position and attitude of the main body of the imaging device 11 may be appropriately detected.

Thus, there has been a possibility that, even when the image sensor 35 is driven by the drive unit 34, a hand-induced shake may not be appropriately corrected. Furthermore, particularly in a case where high-frequency vibration or the like is generated in the image sensor 35, the IMU 31 may not detect a change in the position and attitude of the image sensor 35 as high-frequency vibration and may not appropriately follow the motion, and thus there has been a possibility that appropriate correction may not be made.

Furthermore, since the motion of the image sensor 35 is transmitted by the drive unit 34 including a physical drive mechanism attached to the main body of the imaging device 11, the motion follows the motion of the main body of the imaging device 11 itself. In other words, the motion of the image sensor 35 is a motion that follows the motion of the main body of the imaging device 11, and is a motion delayed by a predetermined time with respect to the motion of the imaging device 11, and thus there has been a possibility that appropriate shake correction may not be enabled.

In view of the above, in the present disclosure, a motion of the image sensor in the future after a predetermined time is predicted from the current motion of the imaging device by learning, and the image sensor is driven to cancel its shake (motion) on the basis of a prediction result to carry out hand shake correction, thereby appropriately dealing with the motion of the image sensor and enabling highly accurate hand shake correction not affected by the delay.

### <Overview of imaging device of present disclosure>

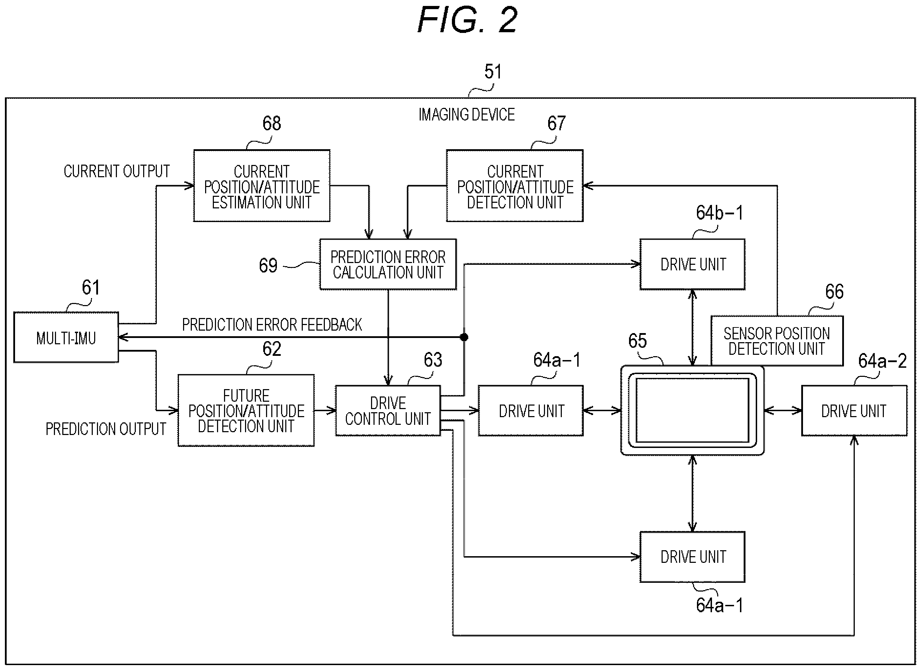

Fig. 2 illustrates a configuration example for explaining an outline of the imaging device that predicts a position and attitude of the image sensor in the future after a predetermined time by learning and controls the position and attitude of the image sensor on the basis of a prediction result.

An imaging device 51 in Fig. 2 includes a multi-IMU 61, a future position/attitude detection unit 62, a drive control unit 63, drive units 64a-1, 64a-2, 64b-1, and 64b-2, an image sensor 65, a sensor position detection unit 66, a current position/attitude detection unit 67, a current position/attitude estimation unit 68, and a prediction error calculation unit 69.

The multi-IMU 61 includes a plurality of IMUs, integrates current angular velocities and accelerations of the main body of the imaging device 51 detected by the plurality of IMUs, and outputs them to the current position/attitude estimation unit 68 as a current output.

Furthermore, the multi-IMU 61 integrates the current angular velocities and accelerations of the main body of the imaging device 51 detected by the plurality of IMUs, predicts angular velocity and acceleration in the future after a predetermined time on the basis of the integrated current angular velocities and accelerations, and outputs them to the future position/attitude detection unit 62 as a prediction output.

Moreover, the multi-IMU 61 obtains a control amount target value supplied from the drive control unit 63 to the drive unit 64 as a prediction error feedback, and carries out learning for predicting the angular velocity and acceleration of the image sensor 65 in the future after the predetermined time on the basis of the current angular velocity and acceleration of the main body unit of the imaging device 51 using the current angular velocity and acceleration of the main body of the imaging device 51 and the prediction error feedback.

That is, according to this learning, the multi-IMU 61 predicts the angular velocity and acceleration of the image sensor 65 in the future after the predetermined time on the basis of the current angular velocity and acceleration of the main body unit of the imaging device 51.

The future position/attitude detection unit 62 detects the position and attitude of the image sensor 65 at the future timing after the predetermined time on the basis of the angular velocity and acceleration of the image sensor 65 in the future after the predetermined time supplied from the multi-IMU 61, and outputs them to the drive control unit 63.

The drive control unit 63 obtains information regarding the position and attitude of the image sensor 65 at the future timing after the predetermined time supplied from the future position/attitude detection unit 62.

Furthermore, the drive control unit 63 obtains information regarding the prediction error, which is a difference between the current position and attitude of the image sensor 65 estimated by the current position/attitude estimation unit 68 from the current angular velocity and acceleration of the main body unit supplied from the prediction error calculation unit 69 and the actual current position and attitude of the image sensor 65 obtained by the current position/attitude detection unit 67 from the actual current angular velocity and acceleration of the image sensor 65 obtained by the sensor position detection unit 66.

Then, the drive control unit 63 sets a control amount target value of the position and attitude of the image sensor 65 in consideration of the prediction error of the position and attitude with respect to the information regarding the position and attitude of the image sensor 65 at the future timing after the predetermined time supplied from the future position/attitude detection unit 62, and supplies it to the drive units 64a-1, 64a-2, 64b-1, and 64b-2 as a control signal.

At this time, the drive control unit 63 supplies the control amount target value to the multi-IMU 61 as prediction error feedback.

The drive units 64a-1, 64a-2, 64b-1, and 64b-2 correspond to the drive units 34a-1, 34a-2, 34b-1, and 34b-2 in Fig. 1, and drive the image sensor 65 in a direction of absorbing a shake on the basis of the control amount target value, which is the control signal supplied from the drive control unit 63.

That is, the drive units 64a-1, 64a-2, 4b-1, and 64b-2 drive the position and attitude of the image sensor 65 in the direction of absorbing the generated shake so that the image sensor 65 is enabled to maintain the position and attitude that satisfy the control amount target value, which is the control signal.

The image sensor 65, which corresponds to the image sensor 35 in Fig. 1, includes a complementary metal oxide semiconductor (CMOS), a charge coupled device (CCD), or the like, and generates pixel signals corresponding to light quantity of incident light to capture an image, and outputs the captured image.

The sensor position detection unit 66 is integrated with the image sensor 65, detects a movement amount of the image sensor 65 in a three-dimensional direction, and outputs it to the current position/attitude detection unit 67.

The current position/attitude detection unit 67 detects the current position and attitude of the image sensor 65 on the basis of the movement amount of the image sensor 65 supplied from the sensor position detection unit 66, and outputs them to the prediction error calculation unit 69.

The current position/attitude estimation unit 68 estimates the position and attitude of the image sensor 65 on the basis of the information regarding the angular velocity and acceleration of the main body of the imaging device 51 supplied from the multi-IMU 61, and outputs an estimation result to the prediction error calculation unit 69.

The prediction error calculation unit 69 calculates a difference between the estimation result of the position and attitude of the image sensor 65 based on the position and attitude of the main body of the imaging device 51 supplied from the current position/attitude estimation unit 68 and the detection result of the actual position and attitude of the image sensor 65 detected by the current position/attitude detection unit 67, and supplies it to the drive control unit 63 as a prediction error.

The drive control unit 63 obtains the prediction error that is a difference between the current position and attitude of the image sensor estimated by the current position/attitude estimation unit 68 and the actual current position and attitude of the image sensor 65 detected by the current position/attitude detection unit 67.

Then, the drive control unit 63 sets the position and attitude to be the control amount target value of the image sensor 65 on the basis of the position and attitude of the image sensor 65 at the future timing after the predetermined time supplied from the future position/attitude detection unit 62 in consideration of the prediction error, generates a control signal for driving the drive unit 64, and supplies the control signal to the drive unit 64 to drive.

That is, the drive control unit 63 is enabled to set the position and attitude of the image sensor to be the control amount target value on the basis of the position and attitude of the image sensor 65 in the future after the predetermined time in consideration of the prediction error and the delay associated with the operation of the drive unit 64.

With this arrangement, the drive control unit 63 is enabled to set, as the control amount target value, the position and attitude of the image sensor 65 required to take the predicted position and attitude at the future timing after the predetermined time, and is also enabled to output the control signal based on the control amount target value to the drive unit 64 in consideration of the delay.

As a result, it becomes possible to set the control amount target value to absorb the delay associated with the operation of the drive unit 64 in addition to the prediction error between the prediction result including the position and attitude of the image sensor 65 in the future after the predetermined time and the actual measurement result including the actual position and attitude of the image sensor 65 driven by the drive unit 64 on the basis of the prediction result.

Note that, at this time, the drive control unit 63 supplies the control amount target value to the multi-IMU 61 as prediction error feedback.

The multi-IMU 61 generates, by prediction learning, a coefficient for predicting the angular velocity and acceleration of the image sensor 65 at the future timing after the predetermined time based on the current angular velocity and acceleration generated by itself from the current angular velocity and acceleration of the main body of the imaging device 51 generated by itself and the prediction error feedback including the control amount target value in the drive control unit 63.

Then, the multi-IMU 61 predicts the angular velocity and acceleration of the image sensor 65 at the future timing after the predetermined time from the current angular velocity and acceleration of the main body of the imaging device 51 using the coefficient generated on the basis of the prediction learning, and outputs them to the future position/attitude detection unit 62.

### <Overview of angular velocity and acceleration prediction>

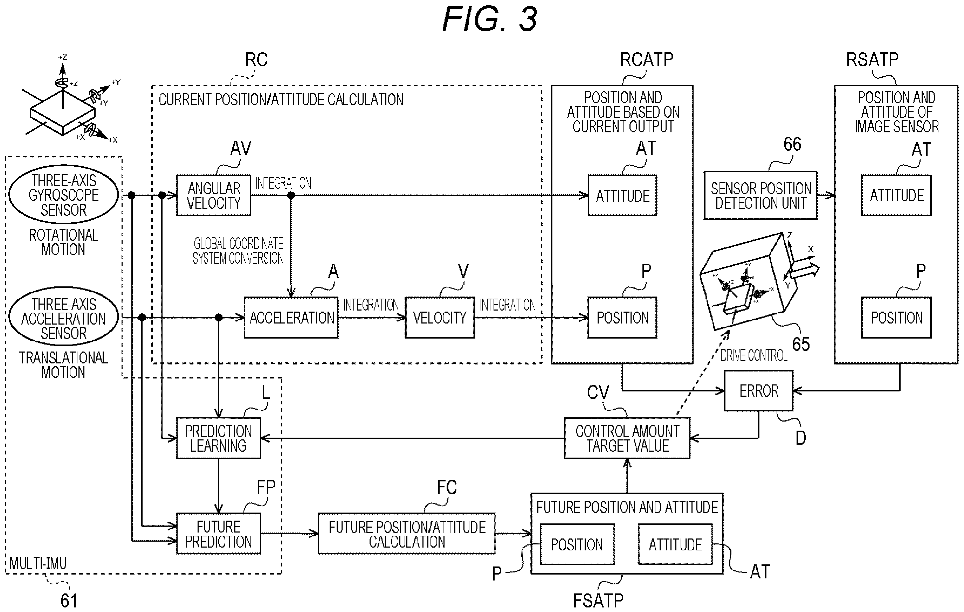

Next, an outline of prediction of angular velocity and acceleration in the multi-IMU 61 will be described with reference to Fig. 3.

The multi-IMU 61 includes a plurality of IMUs including a three-axis gyroscope sensor that detects rotational motion as angular velocity AV and a three-axis acceleration sensor that detects translational motion as acceleration A, and integrates and outputs detection results of the plurality of IMUs. The multi-IMU 61 outputs, as a current output, the angular velocity AV and the acceleration A in the main body unit of the imaging device 51, which are the integrated results of the plurality of IMUs.

Current position/attitude calculation RC is carried out on the basis of the current output including the angular velocity AV and the acceleration A in the main body unit of the imaging device 51, whereby a position P and an attitude AT based on the current output in the main body unit of the imaging device 51 are calculated.

More specifically, in the current position/attitude calculation RC, the angular velocity AV is integrated, thereby obtaining the attitude AT based on the current output in the main body unit of the imaging device 51.

Furthermore, since the acceleration A supplied from the multi-IMU 61 is acceleration in a local coordinate system, it is converted into a global coordinate system by the attitude AT and is further integrated in the current position/attitude calculation RC, thereby obtaining a velocity V in the global coordinate system based on the current output in the main body unit of the imaging device 51.

Moreover, the velocity V in the global coordinate system is integrated, thereby obtaining a position P in the global coordinate system based on the current output in the main body unit of the imaging device 51.

The position P and the attitude AT obtained by the current position/attitude calculation RC are obtained as a position and attitude RCATP of the main body unit of the imaging device 51 based on the current output of the multi-IMU 61. Then, the position and attitude RCATP of the main body unit of the imaging device 51 based on the current output of the multi-IMU 61 is used as an estimate value of the position and attitude of the image sensor 65 at the current time.

Furthermore, the sensor position detection unit 66 integrated with the image sensor 65 detects the position and attitude RCATP of the image sensor 65.

The position and attitude RCATP of the image sensor 65 based on the current output of the multi-IMU 61 is an estimate value based on the position and attitude of the main body unit of the imaging device 51, and does not exactly match an actual position and attitude RSATP of the image sensor 65.

Accordingly, a difference between the position and attitude RCATP of the image sensor 65 based on the current output of the multi-IMU 61 and the position and attitude RSATP of the image sensor 65 is calculated as an error D. This error D is a value corresponding to a positional relationship between the multi-IMU 61 and the sensor position detection unit 66 and a delay that occurs when the drive unit 64 actually drives the image sensor 65.

Meanwhile, in the multi-IMU 61, a future prediction FP is made on the basis of the angular velocity AV and the acceleration A, which are the current output of the main body of the imaging device 51, and angular velocity and acceleration of the main body of the imaging device 51 in the future after a predetermined time are obtained.

Then, future position/attitude calculation FC is carried out on the basis of the angular velocity and acceleration of the main body of the imaging device 51 in the future after the predetermined time obtained by the future prediction FP, and a position and attitude FSATP of the image sensor 65 in the future after the predetermined time is predicted.

Then, a control amount target value CV of the position and attitude of the image sensor 65 in the future after the predetermined time is set on the basis of the position and attitude FSATP of the image sensor 65 in the future after the predetermined time and the error D.

That is, the control amount target value CV indicates the position and attitude at which the image sensor 65 is to be in the future after the predetermined time, and is set in consideration of the error D on the basis of the position and attitude FSATP of the image sensor 65 in the future after the predetermined time.

Then, as indicated by the dotted arrow in the drawing, the image sensor 65 is driven by the drive unit 64 on the basis of the control amount target value CV, and its position and attitude are maintained at the position and attitude of the control amount target value CV. With this arrangement, the generated shake is physically corrected, and the image sensor 65 is maintained at the position and attitude corresponding to the control amount target value CV.

Furthermore, prediction learning L is carried out using the control amount target value CV and the angular velocity AV and the acceleration A, which are the current output of the multi-IMU 61, whereby a coefficient to be used in the future prediction FP is obtained.

Since a motion of an object is a motion according to the inertia corresponding to mass M of the object, it is possible to predict a future motion after a predetermined time from predetermined timing from the motion at the predetermined timing.

In particular, since the larger inertia is generated as the mass M increases, it becomes possible to predict the motion in the future after the predetermined time with higher accuracy. Therefore, for example, the imaging device mounted on a vehicle having larger mass M may predict the future motion with higher accuracy than in a case where the imaging device is mounted on a mobile object such as a drone.

According to this inertia, the future angular velocity and acceleration after the predetermined time from the predetermined timing are predicted on the basis of the angular velocity and acceleration at the predetermined timing.

The control amount target value is a target value of the position and attitude of the image sensor 65 driven by the drive unit 64, which is calculated on the basis of the position and attitude of the image sensor 65 in the future after the predetermined time and the prediction error.

Accordingly, in the prediction learning L, a prediction coefficient is obtained by learning such that the angular velocity and acceleration in the future after the predetermined time, which are predicted on the basis of the current angular velocity and acceleration, become the angular velocity and acceleration corresponding to the position and attitude to be the control amount target value supplied as the prediction error feedback.

The angular velocity and acceleration in the future after the predetermined time are, for example, angular velocity and acceleration in the future after approximately several 10 ms to several 100 ms, and the predetermined time referred to here is, for example, a time corresponding to the delay generated when the drive unit 64 including an actuator or the like is driven.

With this arrangement, it becomes possible to highly accurately predict the angular velocity and acceleration of the image sensor 65 in the future after the predetermined time from the current angular velocity and acceleration of the main body of the imaging device in consideration of the error caused by the positional relationship between the multi-IMU 61 and the image sensor 65 and the delay caused when the drive unit 64 actually drives the image sensor 65.

As a result, it becomes possible to highly accurately detect the position and attitude of the image sensor 65 in the future after the predetermined time, and to highly accurately carry out the physical shake correction of the image sensor 65.

### <<2. First embodiment>>

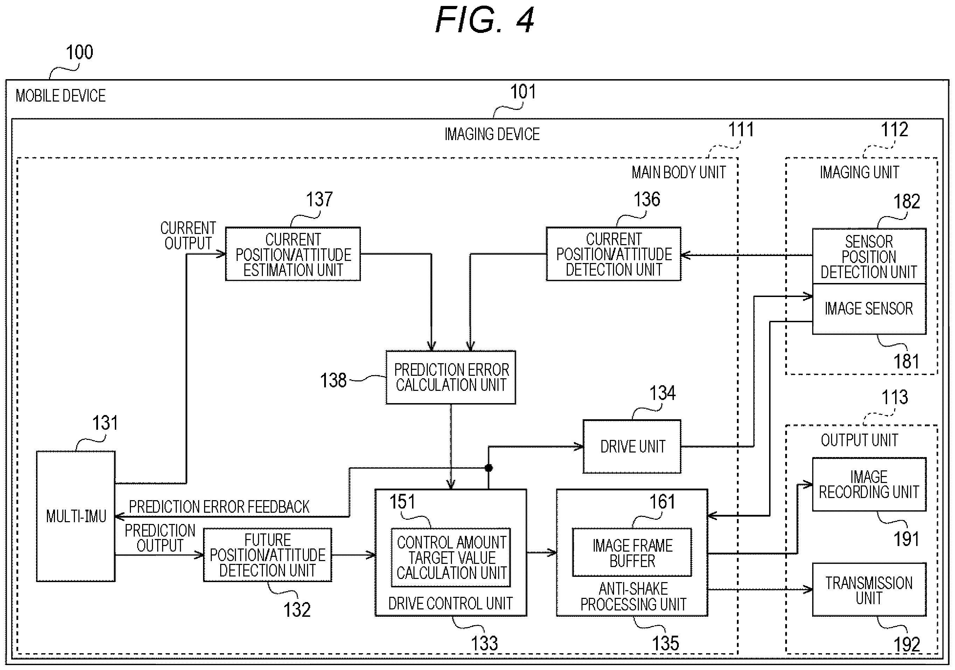

Next, a configuration example of an imaging device according to a first embodiment of the present disclosure will be described with reference to Fig. 4. Note that, while Fig. 4 illustrates a configuration example of a case where an imaging device 101 is mounted on a mobile device 100, such as a vehicle, a drone, or the like, it may not be mounted on the mobile device 100.

The imaging device 101 in Fig. 4 includes a main body unit 111 that controls an operation for correcting a hand-induced shake (including a shake accompanying vibration caused by a motion of the mobile device 100), an imaging unit 112 including an image sensor that captures an image, and an output unit 113 that outputs an image that is an imaging result.

The main body unit 111 includes a multi-IMU 131, a future position/attitude detection unit 132, a drive control unit 133, a drive unit 134, an anti-shake processing unit 135, a current position/attitude detection unit 136, a current position/attitude estimation unit 137, and a prediction error calculation unit 138.

The multi-IMU 131, which corresponds to the multi-IMU 61 in Fig. 2, detects current acceleration and angular velocity of the main body unit 111, and outputs them to the current position/attitude estimation unit 137 as a current output.

Furthermore, the multi-IMU 131 predicts acceleration and angular velocity of an image sensor 181 in the future after a predetermined time on the basis of the detected current acceleration and angular velocity of the main body unit 111, and outputs them to the future position/attitude detection unit 132 as a prediction output.

Moreover, the multi-IMU 131 obtains, from the drive control unit 133, a control amount target value included in a control signal for controlling the drive unit 134, and generates a coefficient for predicting the angular velocity and acceleration of the image sensor 181 in the future after the predetermined time from the current acceleration and angular velocity of the main body unit 111 by learning corresponding to the prediction learning L in Fig. 3 associated with the current acceleration and angular velocity of the main body unit 111.

Then, the multi-IMU 131 predicts the acceleration and angular velocity of the image sensor 181 in the future after the predetermined time from the current acceleration and angular velocity from the multi-IMU 131 of the main body unit 111 using the coefficient generated by the prediction learning.

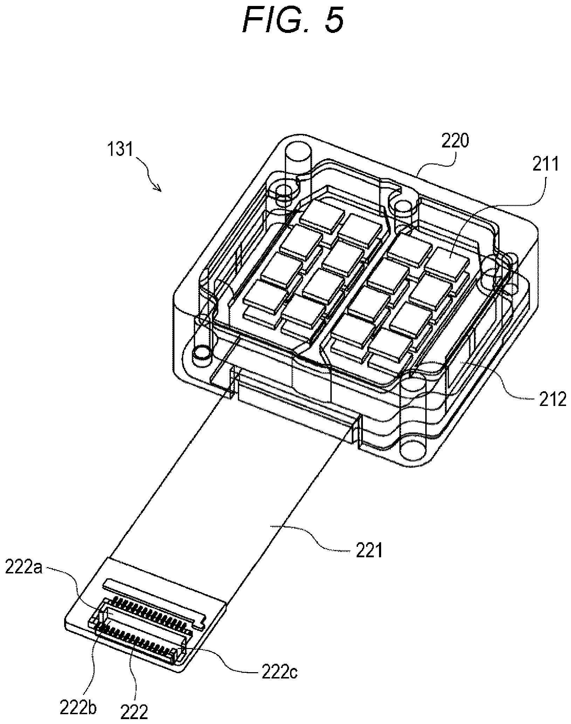

Note that a detailed configuration of the multi-IMU 131 will be described later with reference to Figs. 5 to 7.

The future position/attitude detection unit 132, which corresponds to the future position/attitude detection unit 62 in Fig. 2, executes processing corresponding to the future position/attitude calculation FC in Fig. 3 to detect the position and attitude of the image sensor 181 in the future after the predetermined time on the basis of the angular velocity and acceleration of the image sensor 181 in the future after the predetermined time supplied from the multi-IMU 131, and outputs them to the drive control unit 133.

The drive control unit 133, which corresponds to the drive control unit 63 in Fig. 2, controls the drive unit 134 on the basis of information regarding the position and attitude of the image sensor 181 in the future after the predetermined time supplied from the future position/attitude detection unit 132 and a prediction error that is a difference between an actual measurement result and an estimation result of the current position and attitude of the image sensor 181 supplied from the prediction error calculation unit 138.

More specifically, the drive control unit 133 includes a control amount target value calculation unit 151, and causes it to calculate a control amount target value to be a target value of the position and attitude of the image sensor 181 in the future after the predetermined time on the basis of the information regarding the position and attitude of the image sensor 181 in the future after the predetermined time and the prediction error that is the difference between the actual measurement result and the estimation result of the current position and attitude of the image sensor 181 supplied from the prediction error calculation unit 138.

Then, the drive control unit 133 generates a control signal for driving the image sensor 181 on the basis of the control amount target value, which is the calculation result of the control amount target value calculation unit 151, and supplies it to the drive unit 134 to drive the image sensor 181.

More specifically, the drive control unit 133 generates a control signal for driving the image sensor 181 to absorb the shake accompanying the vibration so that the position and attitude of the image sensor 181 may be maintained at the position and attitude to be the control amount target value, and supplies it to the drive unit 134.

Furthermore, the drive control unit 133 outputs the control amount target value to the multi-IMU 131 as error feedback.

The drive unit 134 includes an actuator or the like corresponding to the drive unit 64 (64a-1, 64a-2, 64b-1, and 64b-2) in Fig. 2, and drives the image sensor 181 on the basis of the control signal from the drive control unit 133.

The drive control unit 133 supplies the control amount target value to the anti-shake processing unit 135. The anti-shake processing unit 135 includes an image frame buffer 161, and buffers an image supplied from the image sensor 181.

The anti-shake processing unit 135 obtains a motion vector indicating a motion of the image sensor 181 as information indicating a size and direction of a hand-induced shake on the basis of the control amount target value supplied from the drive control unit 133. More specifically, the anti-shake processing unit 135 calculates a motion vector in pixel units according to the time-series motion of the image sensor 181 from a difference in the position and attitude of the image sensor 181 as the time-series control amount target value.

Then, the anti-shake processing unit 135 performs, on the basis of the obtained motion vector, hand shake correction based on signal processing on the image captured by the image sensor 181, which is subject to buffering, and outputs it to the output unit 113.

The imaging unit 112 includes the image sensor 181 and a sensor position detection unit 182. The image sensor 181, which corresponds to the image sensor 65 in Fig. 2, captures an image including pixel signals corresponding to light quantity of incident light, and supplies it to the anti-shake processing unit 135.

The sensor position detection unit 182, which corresponds to the sensor position detection unit 66 in Fig. 2, includes a Hall element sensor or the like integrated with the image sensor 181, for example, and detects a movement amount of the image sensor 181 in a three-dimensional direction to output it to the current position/attitude detection unit 136.

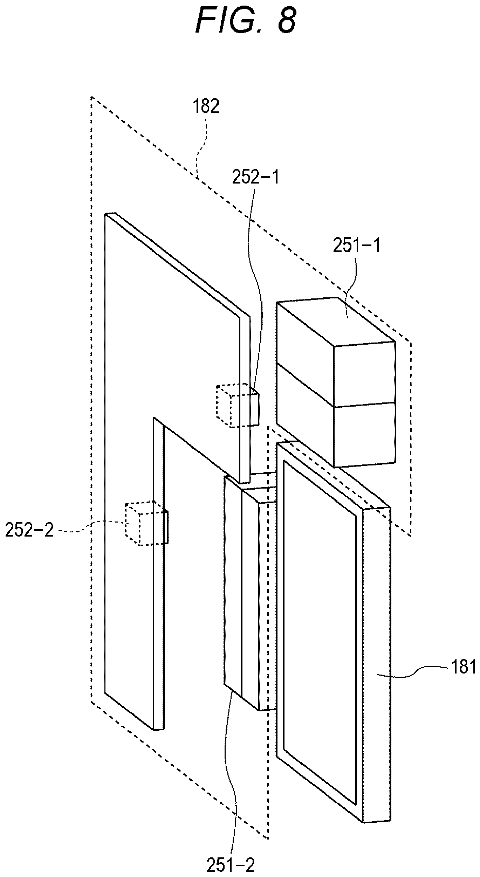

Note that the sensor position detection unit 182 will be described in detail later with reference to Fig. 8.

The current position/attitude detection unit 136 obtains the current position and attitude of the image sensor 181 on the basis of the movement amount of the image sensor 181 in the three-dimensional direction supplied from the sensor position detection unit 182, and outputs them to the prediction error calculation unit 138 as an actual measurement result of the current position and attitude of the image sensor 181.

The current position/attitude estimation unit 137 obtains the current position and attitude of the main body unit 111 on the basis of the current output supplied from the multi-IMU 131, and outputs them to the prediction error calculation unit 138 as an estimation result of the position and attitude of the image sensor 181.

The prediction error calculation unit 138 calculates, as a prediction error, a difference between the actual measurement result of the current position and attitude of the image sensor 181 supplied from the current position/attitude detection unit 136 and the estimation result of the current position and attitude of the image sensor 181 supplied from the current position/attitude estimation unit 137, and supplies it to the drive control unit 133.

The output unit 113 outputs the image corrected by the anti-shake processing unit 135. More specifically, the output unit 113 includes an image recording unit 191 and a transmission unit 192.

The image recording unit 191 records the image corrected by the anti-shake processing unit 135 as data.

The transmission unit 192 includes, for example, Ethernet or the like, and transmits the image corrected by the anti-shake processing unit 135 to an external information processing apparatus, communication terminal, or the like via a network (not illustrated).

Note that the output unit 113 may have any other configuration, and for example, it may include a display having a display function or the like, and may display the image corrected by the anti-shake processing unit 135.

Thus, in the imaging device 101 in Fig. 4, the drive control unit 133 sets the control amount target value of the image sensor 181 on the basis of the information regarding the position and attitude of the image sensor 181 in the future after the predetermined time supplied from the future position/attitude detection unit 132, and drives the drive unit 134, thereby controlling the drive unit 134 to drive the image sensor 181 in consideration of the delay in the operation of the drive unit 134.

With this arrangement, the control amount target value of the position and attitude of the image sensor 181 is set such that the influence of the delay related to the operation of the drive unit 134 is minimized, whereby the hand-induced shake of the image sensor 181 may be corrected highly accurately.

Furthermore, at this time, the drive control unit 133 sets the control amount target value in consideration of the prediction error that is the error between the current image sensor 181, the estimation result, and the actual measurement result, which is supplied from the prediction error calculation unit 138, and controls the drive unit 134, whereby the control amount target value of the position and attitude of the image sensor 181 is set.

With this arrangement, the drive unit 134 is driven in consideration of the error between the estimation result of the current position and attitude of the image sensor 181 estimated from the detection result of the multi-IMU 131 and the actual measurement result of the current position and attitude of the image sensor 181, which enables correction of the hand-induced shake with higher accuracy.

Moreover, with regard to a shake that may not be completely corrected even by controlling the position and attitude of the image sensor 181 by a physical method using the drive unit 134, the anti-shake processing unit 135 performs shake correction by signal processing, whereby the hand-induced shake may be corrected further highly accurately.

### <Appearance configuration example of multi-IMU>

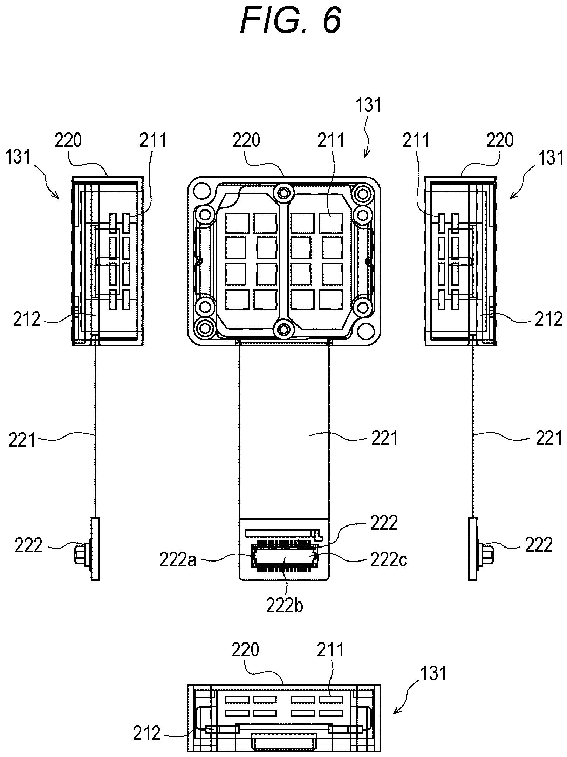

Next, a configuration example of the multi-IMU 131 will be described with reference to Figs. 5 and 6. Note that Fig. 5 is a perspective view of an appearance of the multi-IMU 131, the upper part of Fig. 6 illustrates one side view, a top view, and the other side view from the left, and the lower part of Fig. 6 illustrates a front view.

The multi-IMU 131 includes a main body unit 220, a wiring portion 221, and a terminal 222. The main body unit 220 has a configuration for detecting angular velocity and acceleration of the main body unit 111, and specifically includes IMUs 211 illustrated as a plurality of rectangular configurations in the drawing, and an operation block 212 that integrates individual angular velocities and accelerations detected in the individual IMUs 211 and executes various operations for predicting acceleration and angular velocity in the future after a predetermined time.

Note that Figs. 5 and 6 illustrate an exemplary case of including a total of 32 IMUs 211 in which 16 IMUs 211 are stacked in two layers. Furthermore, the operation block 212 is configured in a lower layer of the stacked IMUs 211 in Fig. 5. Each of the IMUs 211 detects angular velocity and acceleration of the main body unit 111, and outputs them to the operation block 212.

The operation block 212 integrates the detection results of the angular velocity and acceleration of the main body unit 111 supplied from the plurality of individual IMUs 211 to calculate the current angular velocity and angular velocity of the main body unit 111, and outputs them to the current position/attitude estimation unit 137.

Furthermore, the operation block 212 predicts acceleration and angular velocity of the image sensor 181 in the future after the predetermined time on the basis of the integrated current acceleration and angular velocity of the main body unit 111, and outputs them to the future position/attitude detection unit 132.

Moreover, the operation block 212 obtains, by learning, a coefficient for predicting the acceleration and angular velocity of the image sensor 181 in the future after the predetermined time from the control amount target value supplied from the drive control unit 133 and the integrated current acceleration and angular velocity of the main body unit 111, and predicts the acceleration and angular velocity of the main body unit 111 in the future after the predetermined time using the obtained coefficient.

Furthermore, the operation block 212 outputs, via the wiring portion 221 and the terminal 222, the current acceleration and angular velocity of the main body unit 111 as a calculation result and the acceleration and angular velocity of the image sensor 181 in the future after the predetermined time to the current position/attitude estimation unit 137 and the future position/attitude detection unit 132, respectively, and obtains the control amount target value as the prediction error feedback from the drive control unit 133.

The terminal 222 includes a terminal 222a that supplies the current acceleration and angular velocity of the main body unit 111 to the current position/attitude estimation unit 137, a terminal 222b that supplies the acceleration and angular velocity of the image sensor 181 in the future after the predetermined time to the future position/attitude detection unit 132, and a terminal 222c that obtains the control amount target value as the prediction error feedback from the drive control unit 133.

Each of the terminals 222a, 222b, and 222c is, for example, a terminal of a communication standard such as a serial peripheral interface (SPI), inter integrated circuits (I2C), improved inter integrated circuits (I3C), a universal asynchronous receiver/transmitter (UART), or the like.

Note that, while the reference signs of the terminals 222a, 222b, and 222c are accompanied by lead lines in Figs. 5 and 6, none of them indicates that corresponding pins are arranged at the positions accompanied by the lead lines, and it is indicated that the terminal 222 includes each of the terminals 222a, 222b, and 222c.

### <Functions implemented by multi-IMU>

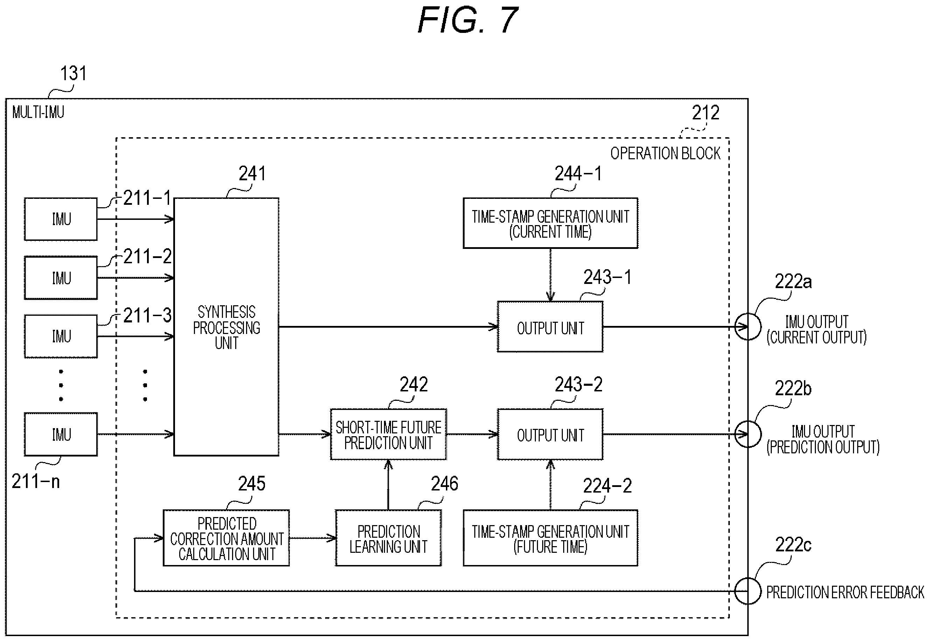

Next, functions to be implemented by the multi-IMU 131 will be described with reference to Fig. 7.

The multi-IMU 131 includes IMUs 211-1 to 211-n and the operation block 212. That is, the IMUs 211-1 to 211-n correspond to the configurations illustrated as 32 rectangular portions in Figs. 5 and 6.

The operation block 212 includes a synthesis processing unit 241, a short-time future prediction unit 242, output units 243-1 and 243-2, time-stamp generation units 244-1 and 244-2, a predicted correction amount calculation unit 245, and a prediction learning unit 246.

The synthesis processing unit 241 obtains the angular velocity and acceleration of the main body unit 111 supplied from each of the IMUs 211-1 to 211-n, combines each of them, and outputs the combined angular velocity and acceleration to the output unit 243-1 and the short-time future prediction unit 242 as one integrated current angular velocity and acceleration of the main body unit 111.

The short-time future prediction unit 242 performs an operation using a coefficient generated by learning by the prediction learning unit 246 on the current angular velocity and acceleration of the main body unit 111 supplied from the synthesis processing unit 241 to predict the angular velocity and acceleration of the image sensor 181 in the future after the predetermined time, and outputs them to the output unit 243-2.

When the output unit 243-1 obtains the current angular velocity and acceleration of the main body unit 111 from the synthesis processing unit 241, it gives a time stamp corresponding to the current time generated by the time-stamp generation unit 244-1 in a time-series manner, and outputs them as a current output from the terminal 222a to the current position/attitude estimation unit 137.

When the output unit 243-2 obtains the angular velocity and acceleration of the image sensor 181 in the future after the predetermined time from the short-time future prediction unit 242, it gives a time stamp corresponding to the time in the future after the predetermined time generated by the time-stamp generation unit 244-2 in a time-series manner, and outputs them as a prediction output from the terminal 222b to the future position/attitude detection unit 132.

The predicted correction amount calculation unit 245 obtains the control amount target value supplied from the drive control unit 133 as the prediction error feedback, calculates, as a predicted correction amount, the angular velocity and acceleration corresponding to the position and attitude of the image sensor 181 to be the control amount target value, and outputs it to the prediction learning unit 246.

The prediction learning unit 246 generates, by learning, a coefficient required to predict the angular velocity and acceleration of the image sensor 181 in the future after the predetermined time from the predicted correction amount and the current angular velocity and acceleration of the main body unit 111, and outputs it to the short-time future prediction unit 242.

The short-time future prediction unit 242 predicts the angular velocity and acceleration of the image sensor 181 in the future after the predetermined time by an operation using the coefficient generated in this manner and the current angular velocity and acceleration of the main body unit 111 supplied from the synthesis processing unit 241, and outputs them to the output unit 243-2. The coefficient to be used in the short-time future prediction unit 242 may be generated and stored in advance at the time of manufacturing. In this case, the predicted correction amount calculation unit 245 and the prediction learning unit 246 may be omitted.

Note that the short-time future prediction unit 242 may include, for example, a neural network. In this case, according to machine learning using the predicted correction amount and the current angular velocity and acceleration of the main body unit 111, the prediction learning unit 246 generates a hidden layer in which an input layer included in the short-time future prediction unit 242 is set as the current angular velocity and acceleration of the main body unit 111 and an output layer is set as the angular velocity and acceleration of the image sensor 181 in the future after the predetermined time. The neural network to be used in the short-time future prediction unit 242 may be generated and stored in advance at the time of manufacturing. In this case, the predicted correction amount calculation unit 245 and the prediction learning unit 246 may be omitted.

Note that, while the example of detecting the angular velocity and acceleration of the main body unit 111 of the imaging device 101 using the multi-IMU 131 including the plurality of IMUs 211 has been described in the present embodiment, the angular velocity and acceleration of the main body unit 111 of the imaging device 101 may be detected by a single IMU 211.

### <Configuration example of sensor position detection unit>

Next, a configuration example of the sensor position detection unit 182 will be described with reference to Fig. 8.

The sensor position detection unit 182 in Fig. 8 is what is called a Hall element sensor, and includes magnets 251-1 and 251-2 and Hall elements 252-1 and 252-2.

The magnets 251-1 and 251-2 are arranged such that magnetization directions of the magnets are aligned with respective movement directions of the image sensor 181 in the vertical direction and the horizontal direction.

In a case where the image sensor 181 is at the origin position, the Hall elements 252-1 and 252-2 are fixedly arranged to coincide with the boundary between the south pole and the north pole of the magnets 251-1 and 251-2, respectively.

With such an arrangement, when the image sensor 181 moves, the magnetic fields applied to the Hall elements 252-1 and 252-2 change proportionally with respect to the movement amount of the magnets around the boundary between the south pole and the north pole of the magnets 251-1 and 251-2.

By measuring the magnetic fields, it becomes possible to detect the positions of the magnets 251-1 and 251-2 in the horizontal direction and the vertical direction within the range of the region.

However, while the sensor position detection unit 182 illustrated in Fig. 8 may detect a change in the position in the planar direction corresponding to the imaging surface of the image sensor 181, a change in the incident direction may not be detected. Although illustration is omitted, this point may be coped with by separately providing the magnet 251 and the Hall element 252 in the incident direction of the incident light.

As described above, the sensor position detection unit 182 detects the movement amount in each of the planar direction corresponding to the imaging surface of the image sensor 181 and the incident direction, and supplies information regarding the detected movement amount in the three-dimensional direction to the current position/attitude detection unit 136.

The current position/attitude detection unit 136 detects the position and attitude of the image sensor 181 on the basis of the movement amount in the three-dimensional direction of each of the incident direction and the planar direction corresponding to the imaging surface of the image sensor 181 supplied from the sensor position detection unit 182.

Note that, instead of the sensor position detection unit 182, an IMU may be separately integrated with the image sensor 181 to detect the angular velocity and acceleration of the image sensor 181 using the IMU, and the current position/attitude detection unit 136 may detect the position and attitude of the image sensor 181 on the basis of the angular velocity and acceleration detected by the IMU.

### <Angular velocity and acceleration detection process by multi-IMU in Fig. 4>

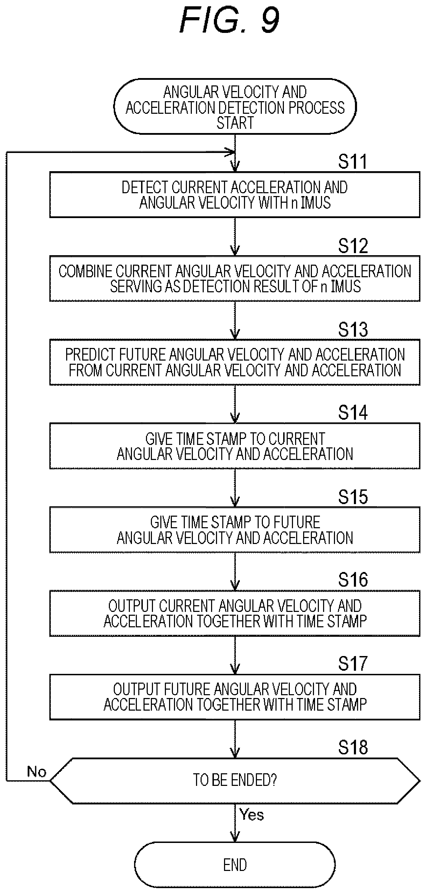

Next, an angular velocity and acceleration detection process performed by the multi-IMU 131 in the imaging device 101 in Fig. 4 will be described with reference to a flowchart of Fig. 9.

In step S11, each of the IMUs 211-1 to 211-n detects the current acceleration and angular velocity of the main body unit 111 to output them to the synthesis processing unit 241.

In step S12, the synthesis processing unit 241 combines the current acceleration and angular velocity of the main body unit 111 detected by each of the IMUs 211-1 to 211-n, and outputs them to the short-time future prediction unit 242 and the output unit 243-1.

In step S13, the short-time future prediction unit 242 predicts the acceleration and angular velocity of the image sensor 181 in the future after a predetermined time by an operation using the coefficient learned by the prediction learning unit 246 on the basis of the current acceleration and angular velocity of the main body unit 111, and outputs them to the output unit 243-2.

In step S14, the output unit 243-1 gives a time stamp corresponding to the current time generated by the time-stamp generation unit 244-1 to the current acceleration and angular velocity of the main body unit 111 supplied from the synthesis processing unit 241.

In step S15, the output unit 243-2 gives a time stamp corresponding to the future time generated by the time-stamp generation unit 244-2 to the acceleration and angular velocity of the main body unit 111 in the future after the predetermined time supplied from the short-time future prediction unit 242.

In step S16, the output unit 243-1 outputs, to the current position/attitude estimation unit 137, the current acceleration and angular velocity of the main body unit 111 as a current output together with the time stamp corresponding to the current time.

In step S17, the output unit 243-2 outputs, to the future position/attitude detection unit 132, the acceleration and angular velocity of the image sensor 181 in the future after the predetermined time as a prediction output together with the time stamp corresponding to the future time.

In step S18, the synthesis processing unit 241 determines whether or not termination of the process has been instructed, and the process returns to step S11 in a case where the termination has not been instructed.

Furthermore, the process is terminated in a case where the termination of the process is instructed in step S18.

According to the process above, the current angular velocity and acceleration of the main body unit 111 are output to the current position/attitude estimation unit 137 as the current output in the state of being attached with the time stamp corresponding to the current time, and the angular velocity and acceleration of the image sensor 181 in the future after the predetermined time are output to the future position/attitude detection unit 132 as the prediction output in the state of being attached with the time stamp corresponding to the future time.

As a result, it becomes possible to output the current angular velocity and acceleration of the main body unit 111 to which the time stamp corresponding to the current time is given and the angular velocity and acceleration of the image sensor 181 in the future after the predetermined time to which the time stamp corresponding to the future time is given.

### <Imaging process by imaging device in Fig. 4>

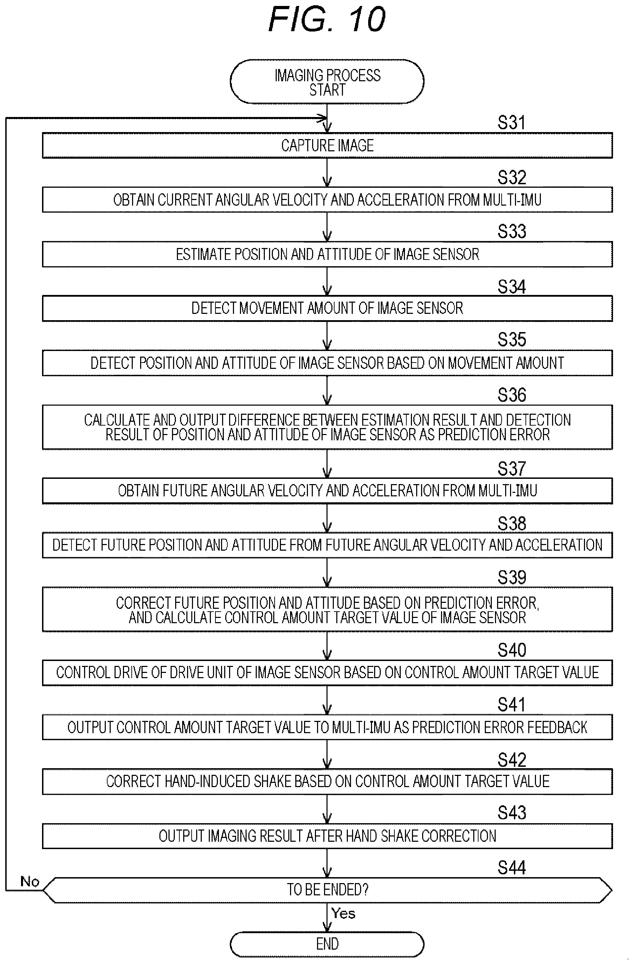

Next, an imaging process performed by the imaging device 101 in Fig. 4 will be described with reference to a flowchart of Fig. 10.

In step S31, the image sensor 181 captures an image, and stores the captured image in the image frame buffer 161 of the anti-shake processing unit 135.

In step S32, the current position/attitude estimation unit 137 obtains the current angular velocity and acceleration of the main body unit 111 that are the current output supplied from the multi-IMU 131.

In step S33, the current position/attitude estimation unit 137 estimates the current position and attitude of the image sensor 181 on the basis of the current angular velocity and acceleration of the main body unit 111, and outputs the current position and attitude of the image sensor 181, which are the estimation result, to the prediction error calculation unit 138.

In step S34, the sensor position detection unit 182 detects the movement amount in the three-dimensional direction of each of the planar direction corresponding to the imaging surface of the image sensor 181 and the incident direction, and supplies information regarding the detected movement amount to the current position/attitude detection unit 136.

In step S35, the current position/attitude detection unit 136 detects the position and attitude of the image sensor 181 on the basis of the information regarding the movement amount in each of the incident direction and the planar direction corresponding to the imaging surface of the image sensor 181 supplied from the sensor position detection unit 182, and outputs them to the prediction error calculation unit 138.

In step S36, the prediction error calculation unit 138 calculates, as a prediction error, a difference between the estimation result of the current position and attitude of the image sensor 181 based on the angular velocity and acceleration detected by the multi-IMU 131 supplied from the current position/attitude estimation unit 137 and the detection result (actual measurement result) of the current position and attitude of the image sensor 181 based on the movement amount in the three-dimensional direction of each of the incident direction and the planar direction corresponding to the imaging surface of the image sensor 181 detected by the sensor position detection unit 182 supplied from the current position/attitude detection unit 136, and outputs it to the drive control unit 133.

In step S37, the future position/attitude detection unit 132 obtains the prediction output of the angular velocity and acceleration of the image sensor 181 in the future after the predetermined time supplied from the multi-IMU 131.

In step S38, the future position/attitude detection unit 132 detects the position and attitude of the image sensor 181 in the future after the predetermined time on the basis of the angular velocity and acceleration of the main body unit 111 in the future after the predetermined time from the multi-IMU 131, and outputs them to the drive control unit 133.

In step S39, the drive control unit 133 controls the control amount target value calculation unit 151 to cause it to calculate the position and attitude to be the control amount target value of the image sensor 181 on the basis of the position and attitude of the image sensor 181 in the future after the predetermined time supplied from the future position/attitude detection unit 132 and the prediction error supplied from the prediction error calculation unit 138.

In step S40, the drive control unit 133 generates a control signal for controlling the drive of the drive unit 134 on the basis of the control amount target value, supplies it to the drive unit 134, and controls the drive of the drive unit 134 to drive the position and attitude of the image sensor 181.

At this time, the drive control unit 133 outputs the control signal of the corresponding control amount target value to the drive unit 134 at timing earlier by a delay time (approximately several 10 ms to several 100 ms) related to the operation of the drive unit 134 on the basis of the time stamp given to the angular velocity and acceleration specifying the position and attitude of the image sensor 181 in the future after the predetermined time used to calculate the control amount target value.

In step S41, the drive control unit 133 outputs the control amount target value to the multi-IMU 131 as error feedback.

In step S42, the drive control unit 133 outputs the control amount target value to the anti-shake processing unit 135. The anti-shake processing unit 135 obtains a motion vector in pixel units on the basis of the time-series control amount target value, and corrects a shake by signal processing, thereby performing hand shake correction on the image stored in the image frame buffer 161 to output the image to the output unit 113.

At this time, the drive control unit 133 outputs the corresponding control amount target value to the anti-shake processing unit 135 at the timing corresponding to the time stamp given to the angular velocity and acceleration specifying the position and attitude of the image sensor 181 in the future after the predetermined time used to calculate the control amount target value. That is, since signal processing is performed here and almost no delay is generated, a delay related to the operation of the drive unit 134 or the like is not considered.

In step S43, the image recording unit 191 of the output unit 113 records the image having been subject to the hand shake correction. Furthermore, the transmission unit 152 of the output unit 113 transmits the image having been subject to the hand shake correction. In a case where the output unit 113 includes a display or the like, the output unit 113 displays the image having been subject to the hand shake correction.

In step S44, it is determined whether or not termination of the imaging process has been instructed, and the process returns to step S31 in a case where the termination is not instructed.

That is, the process of steps S31 to S44 is repeated until the termination of the imaging process is instructed.

Then, in a case where the termination of the imaging process is instructed in step S44, the process is terminated.

According to the process above, the position and attitude to be the control amount target value of the image sensor 181 are set on the basis of the information regarding the position and attitude of the image sensor 181 in the future after the predetermined time, and the drive unit 134 drives the image sensor 181 such that the set position and attitude to be the control amount target value are maintained.

With this arrangement, the position and attitude to be the control amount target value of the image sensor 181 are set in consideration of the delay based on the operation of the drive unit 134, and the control is performed such that the set position and attitude to be the control amount target value are maintained, whereby a shake of the image sensor 181 may be corrected appropriately.

Furthermore, the control amount target value is set in consideration of the prediction error that is the difference between the estimation result of the current position and attitude of the image sensor 181 estimated from the current output of the multi-IMU 131 and the actual measurement result of the position and attitude of the image sensor 181 detected by the sensor position detection unit 182.

With this arrangement, the control amount target value of the image sensor 181 is appropriately set in consideration of the deviation between the position and attitude of the main body unit 111 detected by the multi-IMU 131 and the actual position and attitude of the image sensor 181, whereby a shake may be corrected such that the set position and attitude to be the control amount target value are maintained.

Moreover, the drive unit 134 is controlled according to the control amount target value set on the basis of the position and attitude of the image sensor 181 in the future after the predetermined time, and regarding a prediction error that still occurs, a shake is electronically corrected by the anti-shake processing unit 135 according to the control amount target value, which enables highly accurate shake correction.

As a result, the imaging device 101 mounted on the mobile device 100, such as a drone, a vehicle, or the like, is also enabled to correct a hand-induced shake caused by high-frequency vibration of a driving motor, an engine, or the like of the mobile device 100 (shake based on high-frequency vibration of a motor, an engine, etc.).

### <Learning process by imaging device in Fig. 4>

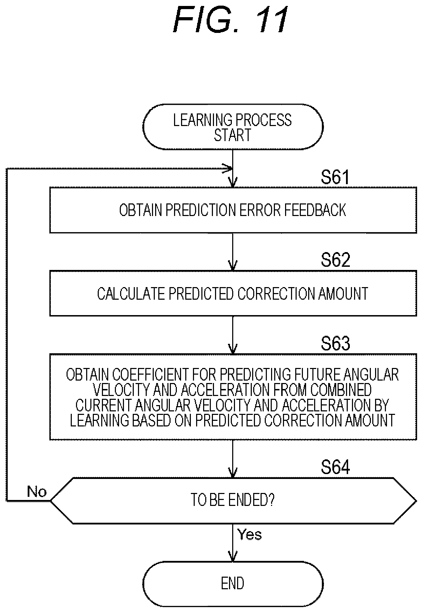

Next, a learning process performed by the imaging device 101 in Fig. 4 will be described with reference to a flowchart of Fig. 11.

In step S61, the predicted correction amount calculation unit 254 obtains the prediction error feedback including the control amount target value supplied from the drive control unit 133.

In step S62, the predicted correction amount calculation unit 254 calculates, as a predicted correction amount, the angular velocity and acceleration in the future after the predetermined time on the basis of the obtained control amount target value of the position and attitude of the image sensor 181, and outputs it to the prediction learning unit 246.

In step S63, the prediction learning unit 246 obtains a coefficient required to predict the angular velocity and acceleration in the future after the predetermined time as the predicted correction amount on the basis of the current angular velocity and acceleration of the main body unit 111, and outputs it to the short-time future prediction unit 242.

In step S64, the prediction learning unit 246 determines whether or not termination is instructed, and in a case where the termination is not instructed, the process returns to step S61 to repeat the subsequent processing.

That is, the process of steps S61 to S64 is repeated until the termination of the process is instructed, and the learning process for obtaining the coefficient and the hidden layer required to predict the angular velocity and acceleration in the future after the predetermined time is repeated on the basis of the current angular velocity and acceleration of the main body unit 111.

Then, the process is terminated when the termination of the process is instructed in step S64.

According to the process above, the process of obtaining the coefficient to be used in the short-time future prediction unit 242 for obtaining the predicted angular velocity and acceleration of the image sensor 181 in the future after the predetermined time on the basis of the current angular velocity and acceleration of the main body unit 111 is repeated, whereby the angular velocity and acceleration in the future after the predetermined time may be detected with higher accuracy.

### <<3. Second embodiment>>

### <Configuration example of imaging device of second embodiment>

In the above, the example has been described in which the coefficient to be used in the short-time future prediction unit 242 of the multi-IMU 131 is learned on the basis of the control amount target value set by the drive unit 134 in consideration of the prediction error between the estimation result and the actual measurement result of the position and attitude of the image sensor 181 of the imaging unit 112.

However, the control amount target value may be obtained from an error between the current angular velocity and acceleration of the main body unit 111 detected in the multi-IMU 131 and the angular velocity and acceleration of the image sensor 181 in the future after the predetermined time, and the coefficient to be used in the short-time future prediction unit 242 may be learned in the multi-IMU 131. In this case, the multi-IMU 131 outputs only the angular velocity and acceleration of the image sensor 181 in the future after the predetermined time to be the prediction output.

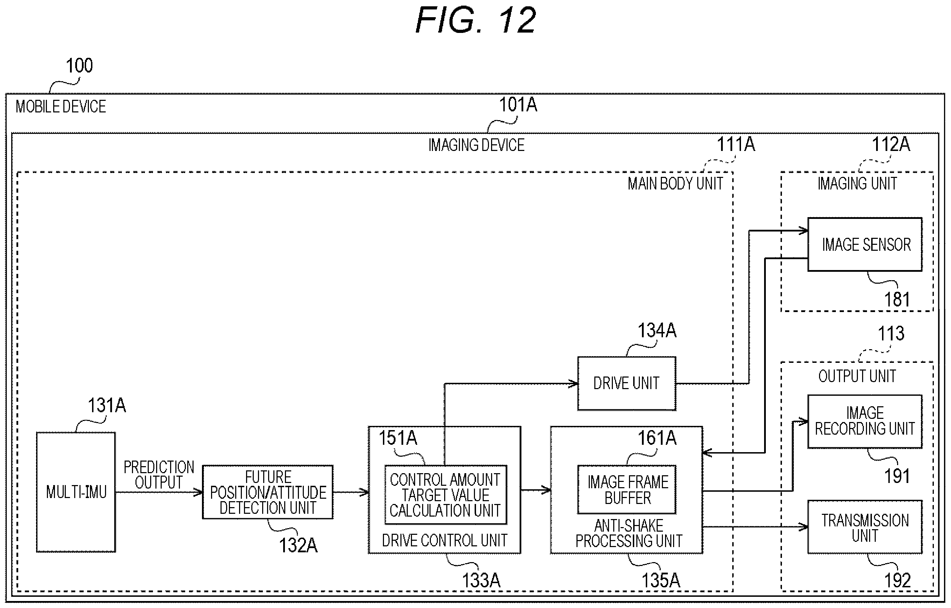

Fig. 12 illustrates a configuration example of an imaging device according to a second embodiment in which a coefficient to be used in a short-time future prediction unit 242 is learned in a multi-IMU 131.

In an imaging device 101A in Fig. 12, a configuration having a function corresponding to the imaging device 101 in Fig. 4 is denoted by a reference sign having "A" added to its end, and description thereof will be appropriately omitted.

The imaging device 101A in Fig. 12 is different from the imaging device 101 in Fig. 4 in that a multi-IMU 131A is provided instead of the multi-IMU 131, and that the current position/attitude detection unit 136, the current position/attitude estimation unit 137, the prediction error calculation unit 138, and the sensor position detection unit 182 are deleted.

That is, since the coefficient to be used in the short-time future prediction unit 242 is learned in the multi-IMU 131A in the imaging device 101A in Fig. 12, the current position/attitude detection unit 136, the current position/attitude estimation unit 137, the prediction error calculation unit 138, and the sensor position detection unit 182 are omitted.

Furthermore, the multi-IMU 131A outputs only information regarding a position and attitude of an image sensor 181 in the future after a predetermined time, which is a prediction output, to a future position/attitude detection unit 132. Thus, a drive control unit 133A controls a control amount target value calculation unit 151A from only the information regarding the position and attitude of the image sensor 181 in the future after the predetermined time, which is the prediction output supplied from the multi-IMU 131A, and causes it to calculate a control amount target value.

### <Configuration example of multi-IMU in Fig. 12>

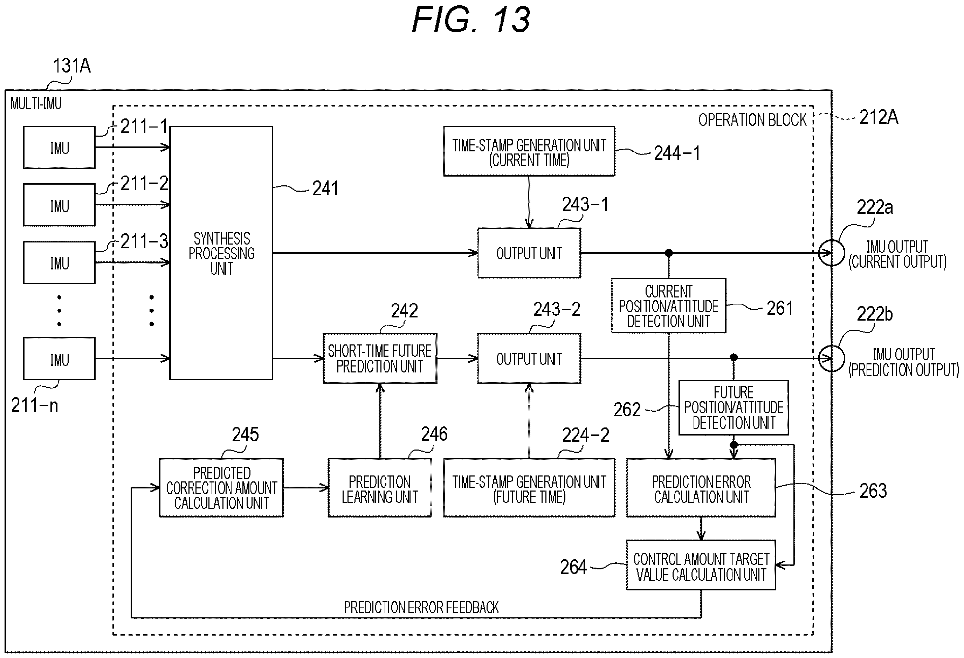

Next, a configuration example of the multi-IMU 131A in Fig. 12 will be described with reference to Fig. 13.

In the multi-IMU 131A in Fig. 13, configurations having the same functions as those of the multi-IMU 131 in Fig. 5 are denoted by the same reference signs, and descriptions thereof will be omitted.

That is, the multi-IMU 131A in Fig. 13 is different from the multi-IMU 131 in Fig. 5 in that a current position/attitude detection unit 261, a future position/attitude detection unit 262, a prediction error calculation unit 263, and a control amount target value calculation unit 264 are newly provided.

The current position/attitude detection unit 261, which corresponds to the current position/attitude estimation unit 137 in Fig. 4, detects (estimates) the current position and attitude of the image sensor 181 on the basis of the current angular velocity and acceleration of a main body unit 111, which serve as a current output output from an output unit 243-1, and outputs them to the prediction error calculation unit 263.

The future position/attitude detection unit 262, which corresponds to the future position/attitude detection unit 132A, detects (estimates) the position and attitude of the image sensor 181 in the future after the predetermined time on the basis of the angular velocity and acceleration of the image sensor 181 in the future after the predetermined time, which serve as the prediction output output from an output unit 243-2, and outputs them to the prediction error calculation unit 263 and the control amount target value calculation unit 264.

Note that, since the current position/attitude detection unit 261 and the future position/attitude detection unit 262 detect (estimate) the position and attitude on the basis of the detection result of the multi-IMU 131A here, respective detection results thereof are substantially the current and future positions and attitudes of the main body unit 111, but in this example assumes that the respective detection results are the estimation results of the position and attitude of the image sensor 181.

The prediction error calculation unit 263, which corresponds to the prediction error calculation unit 138 in Fig. 4, calculates a difference between the estimation result of the current position and attitude of the image sensor 181 and the information regarding the position and attitude of the image sensor 181 in the future after the predetermined time as a prediction error, and outputs it to the control amount target value calculation unit 264.

More specifically, the prediction error calculation unit 263 buffers the information regarding the position and attitude of the image sensor 181 in the future after the predetermined time, calculates a difference from the information regarding the current position and attitude having the same time stamp as a prediction error, and outputs it to the control amount target value calculation unit 264.

The control amount target value calculation unit 264, which corresponds to the control amount target value calculation unit 151A, calculates a control amount target value of the image sensor 181 on the basis of the information regarding the position and attitude of the image sensor 181 in the future after the predetermined time, and outputs it to the predicted correction amount calculation unit 245 as prediction error feedback. At this time, the control amount target value calculation unit 264 calculates the control amount target value in consideration of the prediction error.

The prediction error feedback output from the control amount target value calculation unit 264 corresponds to the prediction error feedback output from the drive control unit 133 in Fig. 4.

That is, in the multi-IMU 131A in Fig. 12, the prediction error feedback is generated in the multi-IMU 131A instead of the prediction error feedback from the drive control unit 133, and a coefficient for predicting the angular velocity and acceleration in the future after the predetermined time is generated in the short-time future prediction unit 242 by learning on the basis of the current angular velocity and acceleration.

Note that, while Fig. 13 illustrates an example in which a terminal 222a for outputting the current angular velocity and acceleration is present, the terminal 222a may also be omitted as the current angular velocity and acceleration are not output.

### <Angular velocity and acceleration detection process by multi-IMU in Fig. 13>

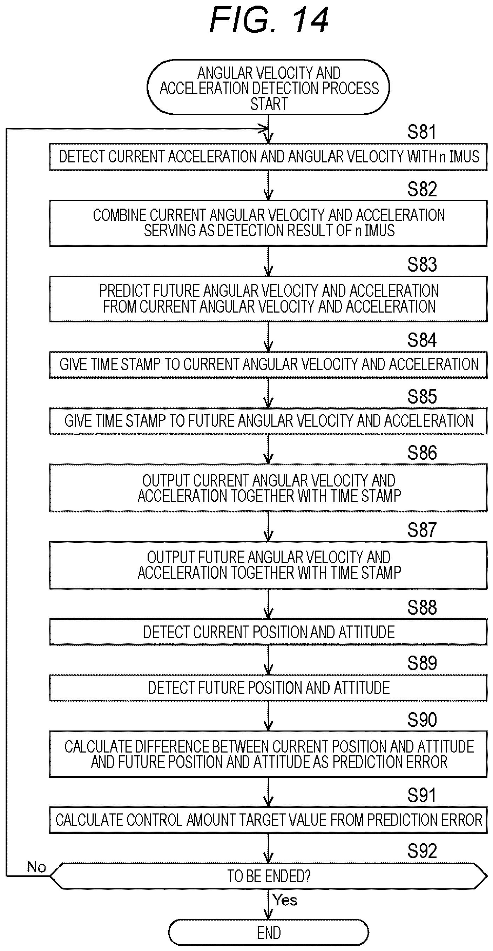

Next, an angular velocity and acceleration detection process performed by the multi-IMU 131A in Fig. 13 will be described with reference to a flowchart of Fig. 14.

Note that processing in steps S81 to S87 and S92 in the flowchart of Fig. 14 is the same processing as the processing in steps S11 to S18 in the flowchart of Fig. 9, and thus descriptions thereof will be omitted.

That is, when the current angular velocity and acceleration and the angular velocity and acceleration in the future after the predetermined time are detected by the process of steps S81 to S87 and are output after being individually attached with time stamps, the process proceeds to step S88.

In step S88, the current position/attitude detection unit 261 detects (estimates) the current position and attitude of the image sensor 181 on the basis of the current angular velocity and acceleration, and outputs them to the prediction error calculation unit 263.

In step S89, the future position/attitude detection unit 262 detects (estimates) the position and attitude of the image sensor 181 in the future after the predetermined time on the basis of the angular velocity and acceleration in the future after the predetermined time, and outputs them to the prediction error calculation unit 263 and the control amount target value calculation unit 264.

In step S90, the prediction error calculation unit 263 calculates a difference between the current position and attitude of the image sensor 181 supplied from the current position/attitude detection unit 261 and the position and attitude of the image sensor 181 in the future after the predetermined time supplied from the future position/attitude detection unit 262, and outputs it to the control amount target value calculation unit 264 as a prediction error.

In step S91, the control amount target value calculation unit 264 calculates a position and attitude to be the control amount target value of the image sensor 181, and outputs it to the predicted correction amount calculation unit 245 as prediction error feedback. At this time, the control amount target value calculation unit 264 calculates the control amount target value in consideration of the prediction error.

According to the process above, the multi-IMU 131A is enabled to learn and generate the coefficient for predicting the angular velocity and acceleration in the future after the predetermined time on the basis of the current angular velocity and acceleration without obtaining the prediction error feedback from the imaging device 101.

With this arrangement, it becomes possible to implement hand shake correction using future angular velocity and acceleration by replacing only the multi-IMU 131A with respect to the imaging device or the like.

As a result, it becomes possible to implement highly accurate hand shake correction at low cost.

Note that the learning process is similar to the process described with reference to the flowchart of Fig. 11, and thus description thereof is omitted.

### <Imaging process by imaging device in Fig. 12>

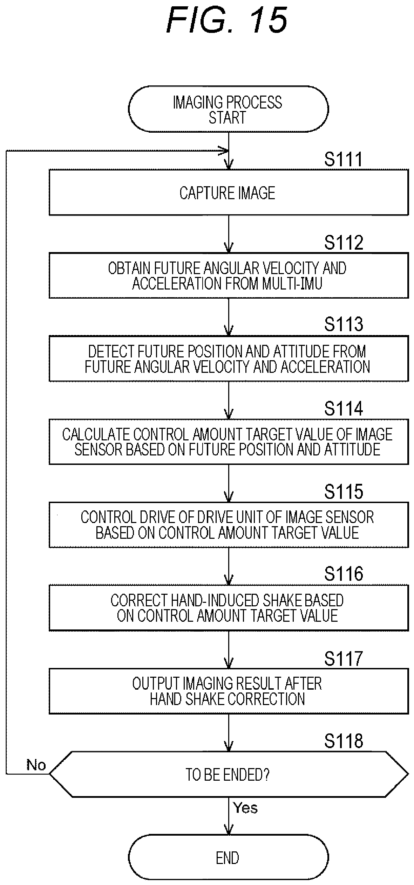

Next, an imaging process performed by the imaging device 101 in Fig. 12 will be described with reference to a flowchart of Fig. 15.

In step Sill, the image sensor 181 captures an image, and stores the captured image in an image frame buffer 161 of an anti-shake processing unit 135.

In step S112, the future position/attitude detection unit 132A obtains the prediction output of the angular velocity and acceleration of the image sensor 181 in the future after the predetermined time supplied from the multi-IMU 131A.

In step S113, the future position/attitude detection unit 132 detects the position and attitude of the image sensor 181 in the future after the predetermined time on the basis of the angular velocity and acceleration of the image sensor 181 in the future after the predetermined time from the multi-IMU 131A, and outputs them to the drive control unit 133A.

In step S114, the drive control unit 133A controls the control amount target value calculation unit 151A to cause it to calculate the position and attitude to be the control amount target value of the image sensor 181 on the basis of the position and attitude of the image sensor 181 in the future after the predetermined time supplied from the future position/attitude detection unit 132A.

In step S115, the drive control unit 133A controls the drive of a drive unit 134A on the basis of the control amount target value, and causes it to control the image sensor 181 such that the state of the position and attitude to be the control amount target value is maintained.

In step S116, the drive control unit 133A outputs the control amount target value to the anti-shake processing unit 135A. The anti-shake processing unit 135A corrects an image stored in the image frame buffer 161A by signal processing on the basis of the control amount target value, thereby performing hand shake correction to output the image to an output unit 113.

In step S117, an image recording unit 191 of the output unit 113 records the image having been subject to the hand shake correction. Furthermore, the transmission unit 152 of the output unit 113 transmits the image having been subject to the hand shake correction. In a case where the output unit 113 is a display unit, the output unit 113 displays the image having been subject to the hand shake correction.

In step S118, it is determined whether or not termination of the imaging process has been instructed, and the process returns to step Sill in a case where the termination is not instructed.

That is, the process of steps Sill to S118 is repeated until the termination of the imaging process is instructed.

Then, in a case where the termination of the imaging process is instructed in step S118, the process is terminated.

According to the process above, the prediction error feedback is generated in the multi-IMU 131A, and the short-time future prediction unit 242 generates, by learning, the coefficient for predicting the angular velocity and acceleration in the future after the predetermined time on the basis of the current angular velocity and acceleration.

With this arrangement, since no prediction error feedback needs to be generated in a configuration other than the multi-IMU 131A in the imaging device 101A, the control amount target value of the image sensor 181 is set on the basis of the information regarding the position and attitude of the image sensor 181 in the future after the predetermined time, and the drive of the drive unit 134A is controlled on the basis of the set control amount target value, whereby it becomes possible to perform control such that the image sensor 181 maintains the position and attitude to be the control amount target value.

As a result, the position and attitude of the image sensor 181 is controlled in consideration of a delay based on the operation of the drive unit 134, whereby a shake of the image sensor 181 may be appropriately corrected. Since the generation of the prediction error feedback is not required at this time, the configuration of the imaging device 101A may be simplified.

Furthermore, with this arrangement, only by replacing and providing only the multi-IMU 131A, it becomes possible to control the position and attitude of the image sensor 181 in consideration of the operation delay caused by the drive unit 134A to implement the shake correction even in an existing imaging device.

As a result, it becomes possible to implement highly accurate shake correction at low cost.

### <<4. Third embodiment>>

While the example of implementing hand shake correction at the time of imaging using the multi-IMU 131A has been described in the above, what is called VR sickness prevention processing may be implemented by correcting a shake of an image displayed by a virtual reality (VR) glass device using the multi-IMU 131A.

A VR goggle device is a device worn on a head of a user, and a display unit is provided at a position facing eyes of the user to display a VR image following the movement of the head of the user wearing the VR glass device.

However, it is known that, when the VR image displayed following the movement of the head is changed, a delay in the display occurs to cause deviation between the displayed VR image and the actual head movement, which causes what is called a VR sickness to the user viewing the VR image.

In view of the above, by providing the multi-IMU according to the present disclosure in the VR glass device, the occurrence of the VR sickness may be suppressed by predicting motion of the VR glass device in the future after a predetermined time and changing and displaying the VR image.

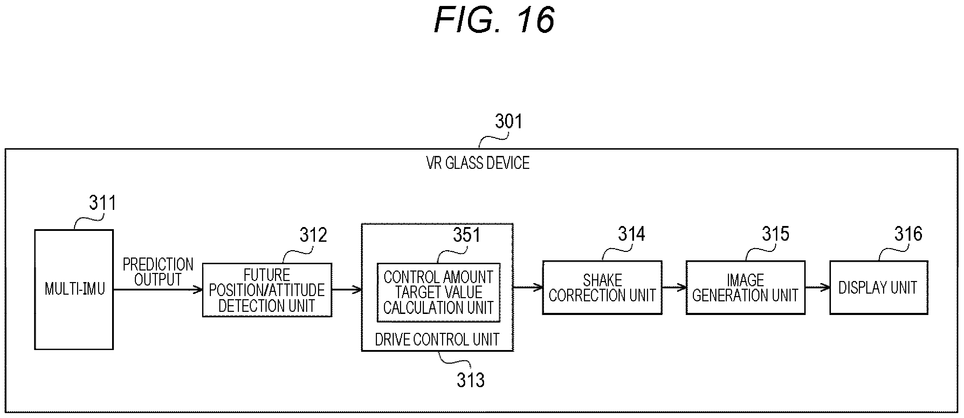

Fig. 16 illustrates a configuration example of the VR glass device to which the multi-IMU 131A used in the imaging device 101A in Fig. 12 is applied.

A VR glass device 301 in Fig. 16 is a device provided with a glasses-like display unit including an organic electro luminescence (EL), a liquid crystal display (LCD), or the like, and is worn on the head of the user in a state where the display surface of the display unit faces the right and left eyes of the user, and a VR image according to the movement of the head of the user is displayed on the display unit.

More specifically, the VR glass device 301 includes a multi-IMU 311, a future position/attitude detection unit 312, a drive control unit 313, a shake correction unit 314, an image generation unit 315, and a display unit 318.

The multi-IMU 311, which has the same configuration as the multi-IMU 131A in Fig. 12, detects angular velocity and acceleration of the head wearing the VR glass device 301 in the future after the predetermined time, and outputs them to the future position/attitude detection unit 312. Note that the predetermined time from the present referred to here, which is the future, is a time corresponding a processing time until the VR image is changed and displayed.

The future position/attitude detection unit 312, which corresponds to the future position/attitude detection unit 132A in Fig. 12, detects the position and attitude of the head wearing the VR glass device 301 in the future after the predetermined time on the basis of the angular velocity and acceleration of the head wearing the VR glass device 301 in the future after the predetermined time supplied from the multi-IMU 311, and outputs them to the drive control unit 313.

The drive control unit 313 includes a control amount target value calculation unit 351, and controls the control amount target value calculation unit 351 to cause it to calculate a control amount target value for specifying a position and attitude of the VR image to be displayed on the VR glass device 301 on the basis of information regarding the position and attitude of the head in the future after the predetermined time supplied from the future position/attitude detection unit 312, and outputs it to the shake correction unit 314.

The shake correction unit 314 performs electronic rotation or translation on the image generated by the image generation unit 315 and displayed on the display unit 316 such that the VR image at the position and attitude corresponding to the control amount target value is displayed on the VR glass device 301, thereby correcting a shake. That is, the shake correction unit 314 corrects the VR image such that it may be viewed in a state where no shake occurs according to a change (change in the line-of-sight direction) in the position and attitude of the head of the user wearing the corresponding VR glass device 301 on the basis of the position and attitude of the VR glass device 301 in the future after the predetermined time.

The image generation unit 315 generates a VR image as a display image, and after a shake of the VR image is corrected by the shake correction unit 314, outputs the VR image to the display unit 318 including an organic electro luminescence (EL), a liquid crystal display (LCD), or the like to display it.

According to the configuration above, the display of the VR image displayed on the display unit 318 is subject to the shake correction according to the movement of the head wearing the VR glass device 301 in the future after the predetermined time, whereby the VR sickness caused by the display delay of the VR image having been subject to the shake correction may be suppressed.

### <Display process by VR glass device in Fig. 16>

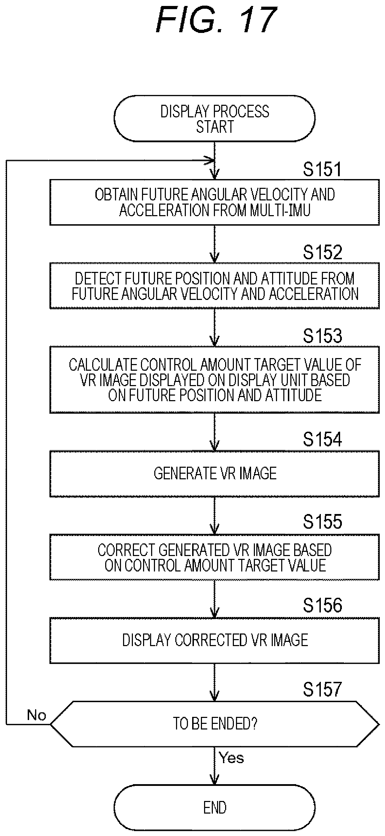

Next, a display process performed by the VR glass device 301 in Fig. 16 will be described with reference to a flowchart of Fig. 17.

In step S151, the multi-IMU 311 detects the angular velocity and acceleration of the VR glass device in the future after the predetermined time by an angular velocity and acceleration detection process, and outputs them to the future position/attitude detection unit 312. Note that the angular velocity and acceleration detection process is the same as the process described with reference to the flowchart of Fig. 14, and thus description thereof will be omitted.

Then, the future position/attitude detection unit 312 obtains the angular velocity and acceleration of the VR glass device 301 in the future after the predetermined time supplied from the multi-IMU 311.

In step S152, the future position/attitude detection unit 312 detects the position and attitude of the VR glass device 301 in the future after the predetermined time on the basis of the angular velocity and acceleration of the VR glass device 301 in the future after the predetermined time from the multi-IMU 311, and outputs them to the drive control unit 313.

In step S153, the drive control unit 313 controls the control amount target value calculation unit 351 to cause it to calculate the position and attitude to be the control amount target value for displaying the VR image to be displayed on the display unit 316 on the basis of the position and attitude of the VR glass device 301 in the future after the predetermined time supplied from the future position/attitude detection unit 312, and outputs it to the shake correction unit 314.

In step S154, the image generation unit 315 generates a VR image to be displayed on the display unit 316.

In step S155, the shake correction unit 314 performs rotation or translation on the image, which is generated by the image generation unit 315 and is to be displayed on the display unit 316, on the basis of the control amount target value, thereby correcting a shake.

In step S156, the image generation unit 315 outputs, to the display unit 316, the VR image having been subject to the shake correction by the shake correction unit 314 such that the position and attitude at which the VR image to be the control amount target value is displayed is maintained, and displays the VR image.

In step S157, it is determined whether or not termination of the display process has been instructed, and the process returns to step S151 in a case where the termination is not instructed.

That is, the process of steps S151 to S157 is repeated until the termination of the imaging process is instructed.

Then, the process is terminated in a case where the termination of the display process is instructed in step S157.

According to the process above, the position and attitude of the VR glass device 301 worn on the head in the future after the predetermined time are detected, and it becomes possible to perform display with shake correction applied such that the display position and attitude of the VR image displayed on the display unit 316 are maintained on the basis of the detected position and attitude of the VR glass device 301 in the future after the predetermined time.

With this arrangement, a shake that occurs in the displayed VR image is corrected according to the movement of the VR glass device 301 in the future after the predetermined time, that is, the movement of the head of the user, whereby what is called the VR sickness may be suppressed.

### <<5. Example of execution by software>>

Meanwhile, the series of processes described above may be executed by hardware, but may also be executed by software. In a case where the series of processes is executed by software, a program included in the software is installed from a recording medium to a computer incorporated in dedicated hardware or, for example, to a general-purpose computer or the like capable of executing various functions by installing various programs.

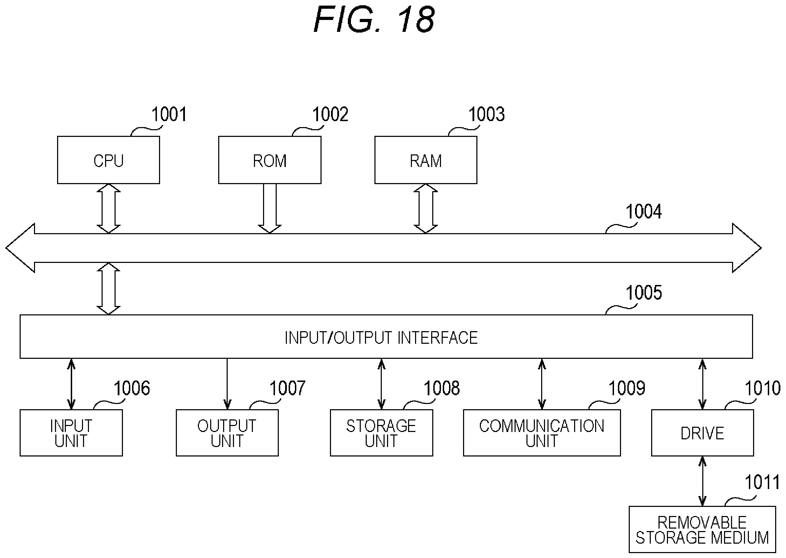

Fig. 18 illustrates a configuration example of a general-purpose computer. This personal computer incorporates a central processing unit (CPU) 1001. An input/output interface 1005 is coupled to the CPU 1001 via a bus 1004. A read only memory (ROM) 1002 and a random access memory (RAM) 1003 are coupled to the bus 1004.

The input/output interface 1005 is coupled to an input unit 1006 including an input device such as a keyboard, a mouse, or the like by which the user inputs an operation command, an output unit 1007 that outputs a processing operation screen and an image of a processing result to a display device, a storage unit 1008 including a hard disk drive or the like that stores programs and various types of data, and a communication unit 1009 that includes a local area network (LAN) adapter or the like and executes communication processing via a network represented by the Internet. Furthermore, a drive 1010 that reads and writes data from and to a removable storage medium 1011, such as a magnetic disk (including flexible disk), an optical disk (including compact disc-read only memory (CD-ROM) and digital versatile disc (DVD)), a magneto-optical disk (including mini disc (MD)), a semiconductor memory, or the like, is coupled.

The CPU 1001 executes various kinds of processing in accordance with a program stored in the ROM 1002, or a program read from the removable storage medium 1011, such as a magnetic disk, an optical disk, a magneto-optical disk, a semiconductor memory, or the like, installed in the storage unit 1008, and loaded from the storage unit 1008 into the RAM 1003. The RAM 1003 also appropriately stores data required for the CPU 1001 to execute the various kinds of processing and the like.

In the computer configured as described above, for example, the CPU 1001 loads the program stored in the storage unit 1008 into the RAM 1003 via the input/output interface 1005 and the bus 1004 and executes the program, thereby performing the series of processes described above.

The program executed by the computer (CPU 1001) may be provided by being recorded in the removable storage medium 1011 as a package medium or the like, for example. Furthermore, the program may be provided via a wired or wireless transmission medium, such as a local area network, the Internet, or digital satellite broadcasting.

In the computer, the program may be installed in the storage unit 1008 via the input/output interface 1005 by attaching the removable storage medium 1011 to the drive 1010. Furthermore, the program may be received by the communication unit 1009 via a wired or wireless transmission medium, and may be installed in the storage unit 1008. In addition, the program may be installed in the ROM 1002 or the storage unit 1008 in advance.

Note that the program executed by the computer may be a program that performs processing in a time-series manner in the order described in the present specification, or may be a program that performs processing in parallel or at necessary timing such as when a call is made.

Note that the CPU 1001 in Fig. 18 implements the functions of the drive control unit 133 and anti-shake processing unit 135 in Fig. 4, the drive control unit 133A and anti-shake processing unit 135A in Fig. 12, and the drive control unit 313 and shake correction unit 314 in Fig. 16.

Furthermore, in the present specification, a system means a set of a plurality of components (devices, modules (parts), etc.), and it does not matter whether or not all the components are in the same housing. Therefore, a plurality of devices housed in separate housings and coupled via a network and one device in which a plurality of modules is housed in one housing are both systems.

Note that embodiments of the present disclosure are not limited to the embodiments described above, and various modifications may be made without departing from the scope of the present disclosure.

For example, the present disclosure may have a configuration of cloud computing in which one function is shared by a plurality of devices via a network and processing is performed in cooperation.

Furthermore, each step described in the flowcharts described above may be executed by one device, or may be executed by a plurality of devices in a shared manner.

Moreover, in a case where one step includes a plurality of kinds of processing, the plurality of kinds of processing included in the one step may be executed by one device, or may be executed by a plurality of devices in a shared manner.

Note that the present disclosure may also have the following configurations.
<1> An inertial measurement device including:
   an inertial measurement unit (IMU) that detects current angular velocity and acceleration; and
   a prediction unit that predicts angular velocity and acceleration in the future after a predetermined time on the basis of the current angular velocity and acceleration detected by the IMU.
<2> The inertial measurement device according to <1>, in which
   the prediction unit predicts the future angular velocity and acceleration by an operation on the current angular velocity and acceleration using a predetermined coefficient.
<3> The inertial measurement device according to <2>, further including:
   a current position/attitude detection unit that detects the current position and attitude on the basis of the current angular velocity and acceleration;
   a future position/attitude detection unit that detects the future position and attitude on the basis of the future angular velocity and acceleration; and
   a learning unit that generates the predetermined coefficient by learning based on a prediction error including a difference between the current position and attitude and the future position and attitude.
<4> The inertial measurement device according to <1>, in which
   the prediction unit includes a neural network having the current angular velocity and acceleration as an input layer and the future angular velocity and acceleration as an output layer.
<5> The inertial measurement device according to <4>, further including:
   a current position/attitude detection unit that detects the current position and attitude on the basis of the current angular velocity and acceleration;
   a future position/attitude detection unit that detects the future position and attitude on the basis of the future angular velocity and acceleration; and
   a learning unit that generates the neural network by machine learning based on a prediction error including a difference between the current position and attitude and the future position and attitude.
<6> The inertial measurement device according to <1>, further including:
   a future output unit that outputs the future angular velocity and acceleration; and
   a current output unit that outputs the current angular velocity and acceleration, in which
   the current output unit adds a time stamp corresponding to the current time to the current angular velocity and acceleration, and outputs the current angular velocity and acceleration, and
   the future output unit adds a time stamp corresponding to time in the future after the predetermined time to the future angular velocity and acceleration, and outputs the future angular velocity and acceleration.
<7> The inertial measurement device according to <6>, in which
   the current output unit and the future output unit output the current angular velocity and acceleration and the future angular velocity and acceleration, respectively, via a terminal of a predetermined communication standard.
<8> The inertial measurement device according to <7>, in which
   the predetermined communication standard includes a serial peripheral interface (SPI), inter integrated circuits (I2C), improved inter integrated circuits (I3C), and a universal asynchronous receiver/transmitter (UART).
<9> The inertial measurement device according to any one of <1> to <8>, in which
   the IMU is a multi-IMU including a plurality of IMUs.
<10> A method of operating an inertial measurement device including an inertial measurement unit (IMU) that detects current angular velocity and acceleration, the method including
   a step of predicting angular velocity and acceleration in the future after a predetermined time on the basis of the current angular velocity and acceleration detected by the IMU.
<11> A program causing a computer that controls an inertial measurement device including an inertial measurement unit (IMU) that detects current angular velocity and acceleration to function as:
   a prediction unit that predicts angular velocity and acceleration in future after a predetermined time on the basis of the current angular velocity and acceleration detected by the IMU.
<12> An imaging device including:
   an image sensor that captures an image;
   a drive unit that drives the image sensor;
   an inertial measurer that detects angular velocity and acceleration of the image sensor in the future after a predetermined time;
   a future position/attitude detection unit that detects a future position and attitude of the image sensor on the basis of the future angular velocity and acceleration; and
   a drive control unit that performs control to drive the drive unit to correct a shake of the image sensor on the basis of the future position and attitude of the image sensor, in which
   the inertial measurer includes:
      an inertial measurement unit (IMU) that detects current angular velocity and acceleration of a main body unit; and
      a prediction unit that predicts the angular velocity and acceleration in the future after the predetermined time on the basis of the current angular velocity and acceleration detected by the IMU.
<13> The imaging device according to <12>, in which
   the drive control unit calculates a position and an attitude to be a control amount target value of the image sensor on the basis of the future position and attitude of the image sensor, and supplies a control signal based on the control amount target value to the drive unit, and
   the drive unit drives the image sensor to maintain the position and the attitude to be the control amount target value on the basis of the control signal.
<14> The imaging device according to <13>, in which
   the drive control unit feeds back the control amount target value to the inertial measurer,
   the prediction unit performs processing using a predetermined coefficient on the current angular velocity and acceleration detected by the IMU to predict the angular velocity and acceleration in the future after the predetermined time, and
   the inertial measurer further includes a learning unit that learns the predetermined coefficient on the basis of the control amount target value.
<15> The imaging device according to <14>, further including:
   a current position/attitude estimation unit that estimates the current position and attitude of the image sensor on the basis of the current angular velocity and acceleration output from a current output unit;
   a position/attitude detection unit that detects a position and an attitude of the image sensor driven by the drive unit; and
   a prediction error calculation unit that calculates, as a prediction error, a difference between the position and attitude of the image sensor as an estimation result of the current position/attitude estimation unit and the position and attitude of the image sensor detected by the position/attitude detection unit, in which
   the inertial measurer further includes:
      a future output unit that outputs the future angular velocity and acceleration; and
      the current output unit that outputs the current angular velocity and acceleration, and
      the drive control unit calculates the position and the attitude to be the control amount target value of the image sensor on the basis of the future position and attitude of the image sensor and the prediction error.
<16> The imaging device according to <15>, further including
   a shake correction unit that performs shake correction by signal processing on the image captured by the image sensor on the basis of the control amount target value.
<17> The imaging device according to <12>, in which
   the prediction unit predicts the future angular velocity and acceleration by performing processing using a predetermined coefficient on the current angular velocity and acceleration detected by the IMU, and
   the inertial measurer further includes:
      a current position/attitude detection unit that detects the current position and attitude of the image sensor on the basis of the current angular velocity and acceleration;
      another future position/attitude detection unit, which is different from the future position/attitude detection unit, that detects the future position and attitude of the image sensor on the basis of the future angular velocity and acceleration;
      a prediction error calculation unit that calculates, as a prediction error, a difference between the current position and attitude detected by the current position/attitude detection unit and the future position and attitude detected by the another future position/attitude detection unit;
      a control amount target value calculation unit that calculates a position and an attitude to be a control amount target value of the image sensor on the basis of the future position and attitude and the prediction error; and
      a learning unit that learns the predetermined coefficient on the basis of the control amount target value.
<18> A display device including:
   a display unit that displays an image viewable by a user in a state of being worn in front of eyes on the head of the user;
   an inertial measurer that detects angular velocity and acceleration of the head in the future after a predetermined time;
   a future position/attitude detection unit that detects a future position and attitude of the head on the basis of the future angular velocity and acceleration; and
   a shake correction unit that corrects a shake of the image displayed on the display unit on the basis of the future position and attitude of the head, in which
   the inertial measurer includes:
      an inertial measurement unit (IMU) that detects current angular velocity and acceleration; and
      a prediction unit that predicts the angular velocity and acceleration in the future after the predetermined time on the basis of the current angular velocity and acceleration detected by the IMU.
<19> The display device according to <18>, further including
   a control amount target value calculation unit that calculates a control amount target value to be a position and an attitude of the image to be displayed on the display unit on the basis of the future position and attitude, in which
   the shake correction unit corrects the shake such that the image is displayed at the position and the attitude to be the control amount target value.
<20> The display device according to <18> or <19>, in which
   the display unit displays a virtual reality (VR) image as the image.

### REFERENCE SIGNS LIST

- 100: Mobile device
- 101: Imaging device
- 111: Main body unit
- 112: Imaging unit
- 113: Output unit
- 131: Multi-IMU
- 132: Future position/attitude detection unit
- 133: Drive control unit
- 134: Drive unit
- 135: Anti-shake processing unit
- 136: Current position/attitude detection unit
- 137: Current position/attitude estimation unit
- 138: Prediction error calculation unit
- 151: Control amount target value calculation unit
- 161: Image frame buffer
- 181: Image sensor
- 182: Sensor position detection unit
- 191: Image recording unit
- 192: Transmission unit
- 211,: 211-1 to 211-nIMU
- 212: Operation block
- 241: Synthesis processing unit
- 242: Short-time future prediction unit
- 243-1,: 243-2 Output unit
- 244-1,: 244-2 Time-stamp generation unit
- 245: Predicted correction amount calculation unit
- 246: Prediction learning unit
- 101A: Imaging device
- 111A: Main body unit
- 131A: Multi-IMU
- 132A: Future position/attitude detection unit
- 133A: Drive control unit
- 134A: Drive unit
- 135A: Anti-shake processing unit
- 151A: Control amount target value calculation unit
- 161A: Image frame buffer
- 261: Current position/attitude detection unit
- 262: Future position/attitude detection unit
- 263: Prediction error calculation unit
- 264: Control amount target value calculation unit
- 311: Multi-IMU
- 312: Future position/attitude detection unit
- 313: Drive control unit
- 314: Shake correction unit
- 315: Image generation unit
- 316: Display unit
- 351: Control amount target value calculation unit

## Claims

1. An inertial measurement device comprising:
an inertial measurement unit (IMU) that detects current angular velocity and acceleration; and
a prediction unit that predicts angular velocity and acceleration in future after a predetermined time on a basis of the current angular velocity and acceleration detected by the IMU.

2. The inertial measurement device according to claim 1, wherein
the prediction unit predicts the future angular velocity and acceleration by an operation on the current angular velocity and acceleration using a predetermined coefficient.

3. The inertial measurement device according to claim 2, further comprising:
a current position/attitude detection unit that detects the current position and attitude on a basis of the current angular velocity and acceleration;
a future position/attitude detection unit that detects the future position and attitude on a basis of the future angular velocity and acceleration; and
a learning unit that generates the predetermined coefficient by learning based on a prediction error including a difference between the current position and attitude and the future position and attitude.

4. The inertial measurement device according to claim 1, wherein
the prediction unit includes a neural network having the current angular velocity and acceleration as an input layer and the future angular velocity and acceleration as an output layer.

5. The inertial measurement device according to claim 4, further comprising:
a current position/attitude detection unit that detects the current position and attitude on a basis of the current angular velocity and acceleration;
a future position/attitude detection unit that detects the future position and attitude on a basis of the future angular velocity and acceleration; and
a learning unit that generates the neural network by machine learning based on a prediction error including a difference between the current position and attitude and the future position and attitude.

6. The inertial measurement device according to claim 1, further comprising:
a future output unit that outputs the future angular velocity and acceleration; and
a current output unit that outputs the current angular velocity and acceleration, wherein
the current output unit adds a time stamp corresponding to the current time to the current angular velocity and acceleration, and outputs the current angular velocity and acceleration, and
the future output unit adds a time stamp corresponding to time in the future after the predetermined time to the future angular velocity and acceleration, and outputs the future angular velocity and acceleration.

7. The inertial measurement device according to claim 6, wherein
the current output unit and the future output unit output the current angular velocity and acceleration and the future angular velocity and acceleration, respectively, via a terminal of a predetermined communication standard.

8. The inertial measurement device according to claim 7, wherein
the predetermined communication standard includes a serial peripheral interface (SPI), inter integrated circuits (I2C), improved inter integrated circuits (I3C), and a universal asynchronous receiver/transmitter (UART).

9. The inertial measurement device according to claim 1, wherein
the IMU is a multi-IMU including a plurality of IMUs.

10. A method of operating an inertial measurement device including an inertial measurement unit (IMU) that detects current angular velocity and acceleration, the method comprising
a step of predicting angular velocity and acceleration in future after a predetermined time on a basis of the current angular velocity and acceleration detected by the IMU.

11. A program causing a computer that controls an inertial measurement device including an inertial measurement unit (IMU) that detects current angular velocity and acceleration to function as:
a prediction unit that predicts angular velocity and acceleration in future after a predetermined time on a basis of the current angular velocity and acceleration detected by the IMU.

12. An imaging device comprising:
an image sensor that captures an image;
a drive unit that drives the image sensor;
an inertial measurer that detects angular velocity and acceleration of the image sensor in future after a predetermined time;
a future position/attitude detection unit that detects a future position and attitude of the image sensor on a basis of the future angular velocity and acceleration; and
a drive control unit that performs control to drive the drive unit to correct a shake of the image sensor on a basis of the future position and attitude of the image sensor, wherein
the inertial measurer includes:
an inertial measurement unit (IMU) that detects current angular velocity and acceleration of a main body unit; and
a prediction unit that predicts the angular velocity and acceleration in the future after the predetermined time on a basis of the current angular velocity and acceleration detected by the IMU.

13. The imaging device according to claim 12, wherein
the drive control unit calculates a position and an attitude to be a control amount target value of the image sensor on a basis of the future position and attitude of the image sensor, and supplies a control signal based on the control amount target value to the drive unit, and
the drive unit drives the image sensor to maintain the position and the attitude to be the control amount target value on a basis of the control signal.

14. The imaging device according to claim 13, wherein
the drive control unit feeds back the control amount target value to the inertial measurer,
the prediction unit performs processing using a predetermined coefficient on the current angular velocity and acceleration detected by the IMU to predict the angular velocity and acceleration in the future after the predetermined time, and
the inertial measurer further includes a learning unit that learns the predetermined coefficient on a basis of the control amount target value.

15. The imaging device according to claim 14, further comprising:
a current position/attitude estimation unit that estimates the current position and attitude of the image sensor on a basis of the current angular velocity and acceleration output from a current output unit;
a position/attitude detection unit that detects a position and an attitude of the image sensor driven by the drive unit; and
a prediction error calculation unit that calculates, as a prediction error, a difference between the position and attitude of the image sensor as an estimation result of the current position/attitude estimation unit and the position and attitude of the image sensor detected by the position/attitude detection unit, wherein
the inertial measurer further includes:
a future output unit that outputs the future angular velocity and acceleration; and
the current output unit that outputs the current angular velocity and acceleration, and
the drive control unit calculates the position and the attitude to be the control amount target value of the image sensor on a basis of the future position and attitude of the image sensor and the prediction error.

16. The imaging device according to claim 15, further comprising
a shake correction unit that performs shake correction by signal processing on the image captured by the image sensor on a basis of the control amount target value.

17. The imaging device according to claim 12, wherein
the prediction unit predicts the future angular velocity and acceleration by performing processing using a predetermined coefficient on the current angular velocity and acceleration detected by the IMU, and
the inertial measurer further includes:
a current position/attitude detection unit that detects the current position and attitude of the image sensor on a basis of the current angular velocity and acceleration;
another future position/attitude detection unit, which is different from the future position/attitude detection unit, that detects the future position and attitude of the image sensor on a basis of the future angular velocity and acceleration;
a prediction error calculation unit that calculates, as a prediction error, a difference between the current position and attitude detected by the current position/attitude detection unit and the future position and attitude detected by the another future position/attitude detection unit;
a control amount target value calculation unit that calculates a position and an attitude to be a control amount target value of the image sensor on a basis of the future position and attitude and the prediction error; and
a learning unit that learns the predetermined coefficient on a basis of the control amount target value.

18. A display device comprising:
a display unit that displays an image viewable by a user in a state of being worn in front of eyes on a head of the user;
an inertial measurer that detects angular velocity and acceleration of the head in future after a predetermined time;
a future position/attitude detection unit that detects a future position and attitude of the head on a basis of the future angular velocity and acceleration; and
a shake correction unit that corrects a shake of the image displayed on the display unit on a basis of the future position and attitude of the head, wherein
the inertial measurer includes:
an inertial measurement unit (IMU) that detects current angular velocity and acceleration; and
a prediction unit that predicts the angular velocity and acceleration in the future after the predetermined time on a basis of the current angular velocity and acceleration detected by the IMU.

19. The display device according to claim 18, further comprising
a control amount target value calculation unit that calculates a control amount target value to be a position and an attitude of the image to be displayed on the display unit on a basis of the future position and attitude, wherein
the shake correction unit corrects the shake such that the image is displayed at the position and the attitude to be the control amount target value.

20. The display device according to claim 18, wherein
the display unit displays a virtual reality (VR) image as the image.
